# EUROPEAN PATENT SPECIFICATION

(11) **EP 0 454 158 B1**
(45) Date of publication and mention of the grant of the patent: **03.09.2003**
(21) Application number: 91106831.0
(22) Date of filing: 26.04.1991
(51) Int. Cl.: C08L 79/08, C08G 73/10

(54) **Polyamic acid composite, polyimide composite and processes for producing the same**
Polyamicsäure-Verbundstoff, Polyimid-Verbundstoff und Verfahren zur Herstellung
Composite d'acide polyamique, composite de polyimide et leur procédé d'obtention

(30) Priority: 27.04.1990 JP 11254090; 27.04.1990 JP 11254190; 01.08.1990 JP 20417190; 01.08.1990 JP 20417290
(43) Date of publication of application: 30.10.1991
(73) Proprietor: Toho Rayon Co., Ltd., Chuo-ku Tokyo (JP)
(72) Inventor: Nagata, Yasuhisa, c/o Toho Rayon Co., Ltd., Sunto-gun, Shizuoka (JP)
(74) Representative: Hansen, Bernd, Dr. Dipl.-Chem.

(56) References cited:
- EP-A- 0 274 603
- EP-A- 0 289 695
- EP-A- 0 418 889

## Description

The present invention relates to new polyamic acid composite which comprises a polyamic acid having a three dimensional network molecular structure and another high polymer component or a curable resin composition. In the former polyamic acid composite, molecular chains of the polyamic acid having a three dimensional network molecular structure are - interpenetrated with molecular chains of the other high polymer component. The present invention further relates to a new polyimide composite obtained from the polyamic acid composite.

Polyimide resins are widely used in the fields of electrical and electronical materials, adhesives, coatings, composite materials, fiber and film materials, because they are excellent in heat resistance, wear resistance, chemical resistance, electrical insulating properties and mechanical characteristics.

Polyimide resin films are also used in various ways as coating materials for electric wires, cables and wires and as insulating materials for transformers and printed-wiring boards, because of their excellent characteristcs.

Many patents exist which disclose a process for the production of a polyimide resin from a polyamic acid as a precursor in which the polyamic acid is prepared by a polyaddition reaction of a tetracarboxylic acid dianhydride and an aromatic diamine in an organic solvent and then subjected to dehydration and cyclization by means of a heating or a chemical dehydrating using a dehydrating agent.

In general, a polyamic acid as a precursor of a polyimide resin is prepared by means of polyaddition of a tetracarboxylic acid dianhydride and an aromatic diamine in an organic solvent with a polymer concentration of 5 to 20% by weight to obtain a high molecular weight polyamic acid homogeneously dissolved in the organic solvent. A film or a molded material is then prepared by removing the organic solvent from the thus prepared polyamic acid solution. Thereafter, the film or molded material is subjected to dehydration and cyclization by means of a high temperature treatment or a chemical treatment to obtain a molded polyimide material.

A simplified process has also been disclosed in, for example, JP-A-57-109614 (the term "JP-A" as used herein means an "unexamined published Japanese patent application") in which a polyamic acid dissolved in an organic solvent is mixed with a dehydrating agent and a catalyst and then the mixture is dried to obtain a polyimide film directly from the thus formed polyamic acid gel film.

With regard to a blend of a polyimide with another high polymer component, a composition in which a polyimide was mixed with a thermoplastic resin such as a polysulfone for the purpose of improving moldability has been disclosed for example in JP-A-63-304054 and JP-A-63-305166.

EP-A-0 418 889 being state of the art in the sense of Article 54(3) EPC relates to polyamic acids having three-dimensional network molecular structures and polyimides obtained therefrom. The polyamic acid is produced by a ring-opening polyaddition reaction of
a) at least one tetracarboxylic acid dianhydride;
b) at least one aromatic diamine; and
c) at least one polyamino compound.

In the 3D molecular network structure, various additives, for example, high molecular compounds (e.g. a polyamic acid derived from components a) and b) and polyimides derived from components a) and b)), may be present.

EP-0 289 695 (Boeing Company) relates to monofunctional cross-linkable thermoplastic polyimide oligomers obtained by reacting a mixture comprising
a) 2 moles of a cross-linkable monoanhydride end cap wherein the dicarboxylic acid anhydride is bound to a crosslinkable unit X
b) n + 1 moles of a polyarylamine and
c) n moles of at least one dianhydride.

The unsaturated unit X is designed to undergo crosslinking during polymerization.

EP-A-0 405 128 (Boeing Company) relates according to claim 1 to a difunctional crosslinkable thermoplastic polyimide oligomer obtained by reacting a mixture comprising
a) 2 moles of a cross-linkable imidophenylamine end cap having the general formula 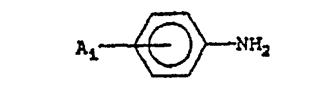 wherein A is selected from a group of unsaturated imido groups having unsaturated units designed to undergo crosslinking
b) n moles of at least one diamine
c) n + 1 moles of at least one dianhydride.

A further embodiment of this patent application relates to a method for improving the thermal stability of composites prepared from polyimide oligomers comprising the step of a) impregnating a fabric with a blend comprising a mixture of said polyimide oligomer and a comparable non-crosslinking polymer to form a prepreg; b) heating said prepreg and c) post-curing.

An object of the present invention is to provide a new polyamic acid composite having improved and new characteristics, in which molecular chains of a three dimensional network molecular structure (high molecular gel structure) of a polyamic acid are interpenetrated with molecular chains of another high molecular weight polymer (hereinafter referred to as a high polymer component).

A second object of the present invention is to provide a new polyamic acid composite in which a curable resin composition is dispersed in the molecular structure of the polyamic acid.

A third object of the present invention is to provide a polyimide composite obtained from the polyamic acid containing the high polymer component or the curable resin composition.

A fourth object of the present invention is to provide processes for the production of the polyamic acid composite and the production of the polyimide composite from the polyamic acid composite.

Other objects and advantages of the present invention will be made apparent as the description progresses.

The polyamic acid composite of the present invention comprises a
i) a polyamic acid having a three-dimensional network molecular structure obtainable by a ring-opening polyaddition reaction of a tetracarboxylic acid dianhydride with an aromatic diamine and tri- or tetramino compound wherein the tetracarboxylic acid dianhydride/ aromatic diamine molar ratio is (100)/(50-100), the tetracarboxylic acid dianhydride/ aromatic diamine/ tri- or tetraamino compound molar ratio is (100)/(50-100)/(2-25) and an equivalent ratio of the reactive groups in the tetracarboxylic acid dianhydride to those in the aromatic diamine and the tri- or tetraamino compound (an acid value/ amine value ratio) is 0.95 to 1.05
ii)
   (a) at least one high molecular weight polymer component selected from polyamideimide, polyetherimide, polyethersulfone, polysulfone, polybenzimidazole, polybenzoxazole, polybenzothiazole, polyamide, polypeptide, polyester, polycarbonate and polyacrylonitrile which is (are) dispersed in the three-dimensional network molecular structure of the polyamic acid and the molecular chains of which are interpenetrated with molecular chains of the polyamic acid or
   (b) a curable resin composition not being a polyamic acid which is dispersed in the three-dimensional network molecular structure of the polyamic acid.

The present invention further relates to a process for preparing this polyamic acid composite, a process for producing a polyimide resin composite, and a polyimide resin obtainable thereby, as defined in the claims.

The polyamic acid (i) usually has a molecular weight of about 10000 to 300000. Component (ii) (a) represents another high molecular-weight polymer component which hereinafter sometimes will be referred to as "high polymer".
Fig. 1 is a photograph of a film of a polyamic acid composite (interpenetrating polymer network molecular structure) prepared in Example 1 of the present invention, taken using a phase contrast microscope at a magnification of 200.
Fig. 2 is a photograph of a film of a polyamic acid composite prepared in Comparative Example 1 taken using a phase-contrast microscope at a magnification of 200.
Fig. 3 is a photograph of a film of a polyimide composite (interpenetrating polymer network molecular structure) prepared in Example 8 of the present invention, taken using a phase contrast microscope at a magnification of 200.
Fig. 4 is a photograph of a film of a polyimide acid composite prepared in Comparative Example 5 taken using a phase contrast microscope at a magnification of 200.
Fig. 5 is a photograph of a film of a polyimide composite (interpenetrating polymer network molecular structure prepared in Example 15 of the present invention, taken using a phase contrast microscope at a magnification of 200.
Fig. 6 is a photograph of a film of a polyimide composite prepared in Comparative Example 7 taken using a phase contrast microscope at a magnification of 200.

The polyamic acid composite of the present invention can be obtained by forming the gel of the polyamic acid containing the high polymer.

Examples of the methods for the preparation of the composite include the followings:
i) The high polymer may be introduced to the reaction system for production of the polyamic acid composite at any stage before, during or after completion of the ring-opening polyaddition reaction of the tetracarboxylic acid with the aromatic diamine and the polyamino compound to form the polyamic acid or at any stage before, during or after completion of the cross-linking reaction of the polyamic acid to form a gel.
   The high polymer may be incorporated as a solid or as a solution thereof, to the reaction solution of a tetracarboxylic acid, an aromatic diamine and a polyamino compound before starting the ring-opening polyaddition reaction or during the reaction before the reaction mixture becomes a gel. A solution of the high polymer may also be impregnated into the gel of the polyamic acid.
ii) The high polymer may be introduced to the reaction system for the production of the polyamic acid composite by conducting polymerization of the monomer(s) for the high polymer at any stage before, during or after completion of the polyaddition reaction or before, during or after completion of the cross-linking reaciton.

According to a preferred embodiment of the process of the present invention, a polyamic acid composite is prepared by the following illustrative steps.
(1) Preparation of a polyamic acid solution.
(2) Dissolution or dispersion of a high polymer component in a solvent.
(3) Mixing of the polyamic acid solution with the high polymer component solution or dispersion.
(4) Cross-linking reaction of polyamic acid component to complete formation of a composite gel.
(5) Removal of the solvent in the case of the composite gel is used in dry form.

The polyamic acid solution is prepared from a tetracarboxylic acid dianhydride, an aromatic diamine and a tri- or tetraamino compound as the main components by means of ring-opening polyaddition reaction.

A polyamic acid solution uniformly dissolved in an organic solvent is obtained as an intermediate product from a tetracarboxylic acid dianhydride, an aromatic diamine and a tri- or tetraamino compound by means of ring-opening polyaddition reaction. When unreacted functional groups in the intermediate polyamic acid are allowed to undergo gradual cross-linking reaction in the organic solvent, the polyamic acid forms a three dimensional network molecular structure and subsequently into a gel. By this way, a polyamic acid high molecular weight gel containing an organic solvent is obtained. The polyamic acid in the gel form usually has a molecular weight of about 10,000 to 300,000.

The high polymer component is preferably added to a reaction mixture for production of the polyamic acid solution which is not yet made into a gel form. It is preferred that the reaction mixture has a viscosity of not more than 500 poise (at 25°C). The reaction mixture undergoes polyaddition reaction and cross-linking reaction to obtain a gel of the polyamic acid.

Before the completion of the gelation, preferably before starting the gelation, the mixed solution of the second component with the polyamic acid constituents may be poured into a mold or cast on a plane support (such as glass plate) to form a desired molded material such as a film or filaments.

Unreacted functional groups in the polyamic acid are allowed to undergo gradual cross-linking reaction in the organic solvent by standing the solution for at least 1 minute at a temperature of from 0 to 100°C. In this way, constituents of the polyamic acid forms a three dimensional network molecular structure and, as the results, a polyamic acid high molecular gel containing an organic solvent and a second component (i.e., the high polymer or the curable resin composition) is obtained.

Typical examples of the tetracarboxylic acid dianhydride used in the present invention are a tetracarboxy benzene dianhydride, a tetracarboxy dianhydride of a compound having 2 to 5 condensed benzene rings, and compounds represented by formula (I), and substituted compounds thereof: 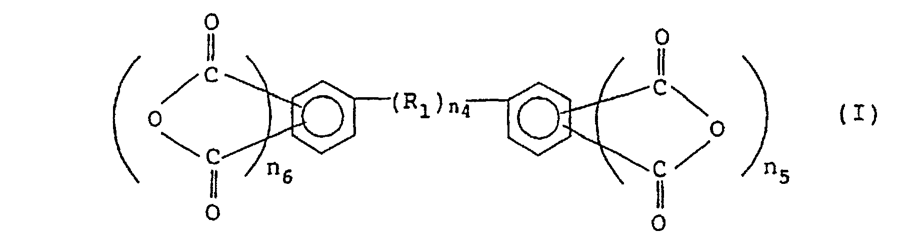 wherein R₁ represents -O-, -CO-, -SO₂-, -SO-, an alkylene group, an alkylene bicarbonyloxy group, an alkylene bioxycarbonyl group, a phenylene group, a phenylene alkylene group, or a phenylene dialkylene group; n₄ is 0 or 1; n₅ is 0 or 1; and n₆ represents 1 or 2, provided that the sum of n₅ and n₆ is 2.

Illustrative examples of tetracarboxylic acid dianhydrides eligible for use in the present invention include pyromellitic acid dianhydride, 3,3',4,4'-benzophenonetetracarboxylic acid dianhydride, 3,3',4,4'-biphenyltetracarboxylic acid dianhydride, 2,3,3',4'-biphenyltetracarboxylic acid dianhydride, 2,2',3,3'-biphenyltetracarboxylic acid dianhydride, 2,2'/6,6'-biphenyltetracarboxylic acid dianhydride, 2,3,6,7-naphthalenetetracarboxylic acid dianhydride, 1,2,5,6-naphthalenetetracarboxylic acid dianhydride, 2,2-bis(3,4-dicarboxyphenyl)propane dianhydride, bis(3,4-dicarboxyphenyl)sulfone dianhydride, bis(3,4-dicarboxyphenyl)ether dianhydride, 3,4,9,10-perylenetetracarboxylic acid dianhydride, naphthalene-1,2,4,5-tetracarboxylic acid dianhydride, naphthalene-1,4,5,8-tetracarboxylic acid dianhydride, benzene-1,2,3,4-tetracarboxylic acid dianhydride and the like. Also useful are tetracarboxylic acid dianhydrides having relatively large molecular weights in which each molecule contains certain groups such as amido, ester sulfone, ether, sulfone, methylene, propylene, phenylene, imidazole, thiazole and like groups, as well as tetracarboxylic acid dianhydrides containing halogen atoms such as fluorine in the structure. These compounds may be used alone or as a mixture of two or more thereof.

Typical examples of the aromatic diamine used in the present invention are a phenylene diamine, a diamino pyridine, a diamino compound having 2 to 8 condensed benzene rings, compounds represented by formula (II), and substituted compounds thereof: 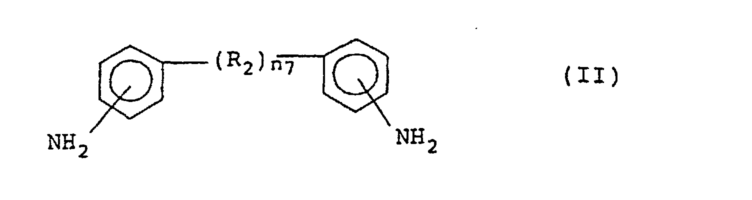 wherein R₂ represents -O-, -CO-, -SO₂-, -SO-, a phenylene group, an alkylene group, a phenylene alkylene group, a phenylene dialkylene group, or 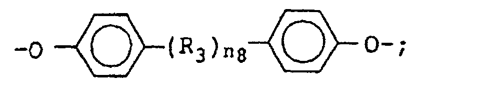 n₇ is 0 or 1; R₃ represents -O-, -CO-, -SO₂-, -SO-, a phenylene group, an alkylene group, or a phenylene alkylene group, a phenylene dialkylene group; and n₈ is 0 or 1.

Illustrative examples of aromatic diamines reacted with the above tetracarboxylic acid dianhydrides include metaphenylenediamine, paraphenylenediamine, 4,4'-diaminodiphenylpropane, 4,4'-diaminodiphenylmethane, 3,3'-diaminodiphenylmethane, 4,4'-diaminodiphenylsulfide, 4,4'-diaminodiphenylsulfone, 3,3'-diaminodiphenylsulfone, 3,4'-diaminodiphenylsulfone, 4,4'-diaminodiphenyl ether, 3,3'-diaminodiphenyl ether, 3,4'-diaminodiphenyl ether, 4,4'-diaminobenzophenone, 3,3'-diaminobenzophenone, 2,2'-bis(4-aminophenyl)propane, benzidine, 3,3'-diaminobiphenyl, 2,6-diaminopyridine, 2,5-diaminopyridine, 3,4-diaminopyridine, bis[4-(4-aminophenoxy) phenyl] sulfone, bis[4-(3-aminophenoxy)phenyl]sulfone, bis[4-(4-aminophenoxy)phenyl] ether, bis[4-(3-aminophenoxy)phenyl] ether, 2,2'-bis[4-(4-aminophenoxy)phenyl]propane, 2,2'-bis[4-(3-aminophenoxy) phenyl]propane, 4,4'-bis(4-aminophenoxy)-biphenyl, 1,4-bis(4-aminophenoxy)benzene, 1,3-bis(4-aminophenoxy)benzene, 2,2'-bis[4-(3-aminophenoxy)phenyl]hexafluoropropane, 1,5-diaminonaphthalene, 2,6-diaminonaphthalene and the like and derivatives thereof. Also useful are dihydrazide compounds such as isophthalic acid dihydrazide. These compounds may be used alone or as a mixture of two or more.

Typical examples of the tri- or tetraamino compound used in the present invention are represented by formula (III) or (IV): 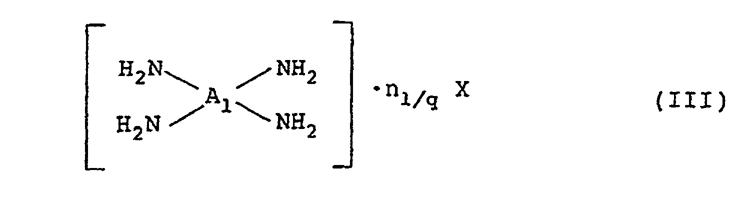 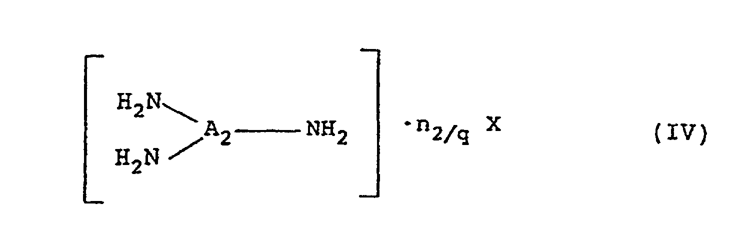 wherein A₁ represents 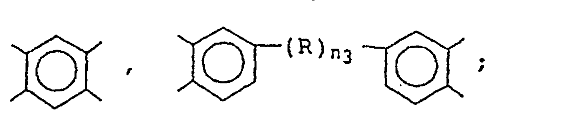 A₂ represents 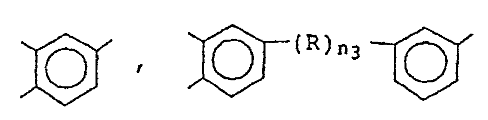 or 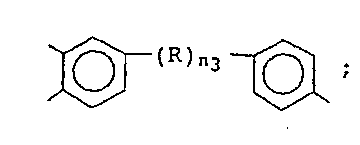 n₁ is 0 or an integer of 1 to 4; n₂ is 0 or an integer of 1 to 3; X represents an acid; q is the base number of the acid; R represents -O-, -CH₂-, -CO- or -SO₂-; and n₃ is 0 or 1; A₁ and A₂ may be substituted.

The acid represented by X in formulae (III) and (IV) may be either an organic or inorganic acid. Examples of the acid include p-toluenesulfonic acid, picric acid, and hydrochloric acid.

These compounds may be used either alone or as a mixture of two or more of them.

Illustrative examples of tri- or tetraamino compounds for use in the present invention include 3,3',4,4'-tetraaminodiphenyl ether, 3,3',4,4'-tetraaminodiphenylmethane, 3,3',4,4'-tetraaminobenzophenone, 3,3',4,4'-tetraaminodiphenylsulfone, 3,3',4,4'-tetraaminobiphenyl, 1,2,4,5-tetraaminobenzene, 3,3',4,-triaminodiphenyl ether, 3,3',4-triaminodiphenylmethane, 3,3',4-triaminobenzophenone, 3,3',4-triaminodiphenylsulfone, 3,3',4-triaminobiphenyl, 1,2,4-triaminobenzene and the like. Also useful are derivatives of the above compounds in which their functional groups are changed into the form of quaternary ammonium salts, such as 3,3',4,4'-tetraaminobiphenyl tetrachloride and the like. The quaternary ammonium salts may be used not only as hydrochlorides but also as sulfates or organic acid salts. Tri- or tetraamino compound derivatives in which their functional groups are partially changed into quaternary ammonium salts may also be used. Some of the above compounds are available as hydrates which are also useful. The use of aliphatic tri- or tetraamino compounds may also be possible. These tri- or tetraamino compounds may be used alone or as a mixture of two or more thereof.

The substituent for compound represented by formulae (I) to (IV) should not adversely affect the polyaddition reaction and should not deteriorate characteristics of the products obtained therefrom. Examples of such substituents include an aliphatic group, and a halogen atom.

The high polymer component to be mixed with the polyamic acid composition is selected from polyamideimides, polyetherimides, polyethersulfones, polysulfones, polybenzimidazoles, polybenzoxazoles, polybenzothiazoles, polyamides, polypeptides, polyesters, polycarbonates and polyacrylonitriles. Modified products and precursors of various polymers and oligomers are also useful as the high polymer component. These components may be used alone or as a mixture of two or more thereof.

A polyamic acid is obtained from at least one of tetracarboxylic acid dianhydrides, at least one of aromatic diamines and at least one of polyamino compounds by means of a ring opening polyaddition reaction and cross-linking reaction of the polyaddition product. Such a polyamic acid has a three dimensional network molecular structure, i.e., a high polymer gel, which is possessed of a free-standing capability to keep its shape since it does not undergo flow even if it contains an organic solvent in a large amount.

Since each of the tetracarboxylic acid dianhydride, aromatic diamine and polyamino compound is used alone or as a mixture of two or more compounds, the resulting polymers include copolymers. A blend of polyamic acids may also be obtained in which a specific polyamic acid is mixed with another polyamic acid which obtained from the same monomer components but at least one of its components is replaced by a different compound.

The polymerization reaction for the preparation of a polyamic acid from a tetracarboxylic acid dianhydride, an aromatic diamine and a tri- or tetraamino compound as the main components may be carried out in an organic solvent at a temperature of from -10°C to 30°C, preferably from -5°C to 20°C, within a reaction time of 5 hours, preferably within 2 hours and usually at least 5 minutes. A reaction temperature lower than -10°C is not preferable, because not only it requires rather difficult handling and a special reaction means but also the reaction itself does not proceed appropriately in some cases. If the reaction temperature exceeds 30°C, the reaction mixture is quickly formed into a gel form within such a short time that a high polymer component composites with difficulty with the polyamic acid and, therefore, a homogeneous composite is hardly obtained in some cases.

The organic solvent for use in the polymerization reaction for the preparation of a polyamic acid from a tetracarboxylic acid dianhydride, an aromatic diamine and a tri- or tetraamino compound as the main components should be inert in the reaction and should have the ability to dissolve the monomers and high polymer components. Typical examples of such organic solvents include N,N-dimethylformamide, N,N-dimethylacetamide, N,N-diethylformamide, N,N-diethylacetamide, dimethylsulfoxide, N-methyl-2-pyrrolidone, N,N-dimethylmethoxyacetamide, hexamethylphosphamide, pyridine, dimethylsulfone, tetramethylenesulfone, cresol, phenols such as phenol, xylenol and the like; and benzene, toluene, xylene, benzonitrile, dioxane, cyclohexane and the like. These solvents may be used alone or as a mixture of two or more thereof.

Reaction of a tetracarboxylic acid dianhydride with a tri- or tetraamino compound is performed at a molar ratio of tetracarboxylic acid dianhydride/ tri- or tetraamine = (100)/(2-25), more preferably (100)/(4-15), though the optimum ratio may sometimes be slightly outside of these ranges, depending on the monomers used.

In general, when a polyamic acid is prepared from a tetracarboxylic acid dianhydride and an aromatic diamine, it is preferable to use these compounds in a molar ratio as close to stoichiometrically equivalent as possible to increase molecular weight of the product. According to the process of the present invention, in order to obtain a polyamic acid composite having free-standing capability by increasing the degree of polymerization of the polyamic acid, it is necessary to adjust the tetracarboxylic acid dianhydride/aromatic diamine molar ratio to (100)/(50-100), the tetracarboxylic acid dianhydride/aromatic diamine/tri- or tetraamino compound molar ratio to (100)/(50-100)/(2-25) and an equivalent ratio of the reactive groups in the tetracarboxylic acid dianhydride to those in the amines (an acid value/amine value ratio) to 0.95 to 1.05.

If monomers are mixed in an amount outside of these compositional ranges, the degree of polymerization of the polyamic acid may not be increased and the resulting composite may have inferior mechanical and like properties. In such instance, a portion of monomers will remain unreacted in the polymer solution and exert a serious influence upon the properties of the composite obtained upon evaporation and drying of the polymer solution. If the amount of a tri- or tetraamino compound is less than 2 mol per 100 mol of a tetracarboxylic acid dianhydride, polyamic acid components may not form a three dimensional network molecular structure and, therefore, a high polymer gel may not be obtained. If the amount of a tri- or tetraamine is larger than 25 mol per 100 mol of a tetracarboxylic acid dihydride, the polyamic acid component forms a three dimensional network structure having too many crosslinking points which increases the brittleness, or decreases the strength, of the polyamic acid composite and polyimide composite obtained therefrom.

The reaction of a tetracarboxylic acid dianhydride with an aromatic diamine and a tri- or tetraamine can be regarded as a reaction of a tetracarboxylic acid dianhydride with amines. The reaction, therefore, can be effected by dissolving an aromatic diamine and a tri- or tetraamino compound in an organic solvent and then adding a tetracarboxylic acid dianhydride to the solution under an inert atmosphere such as a nitrogen gas atmosphere. The tetracarboxylic acid dianhydride to be added to the solution may be either in a solid form or in a liquid form by dissolving it in appropriate solvent. The reaction may also be effected by adding an aromatic diamine and a tri- or tetraamino compound to a solution of a tetracarboxylic acid dianhydride under an inert gas atmosphere.

The high polymer component may be dissolved in an appropriate solvent and then added to the aforementioned solution of reaction components or the polyamic acid solution to form a composite of the polyamic acid containing the high polymer component. When the thus mixed polyamic acid/high polymer component solution is kept at a temperature usually of from about 0 to 100°C, the solution achieves a gel form by three dimensional cross-linking reaction of the polyamic acid component. In this way, a high polymer gel of a polyamic acid composite is formed.

For the purpose of obtaining an extremely uniform polyamic acid composite, it is desirable to mix a high polymer component with the polyamic acid solution before the polyamic acid forms a three dimensional network molecular structure to be a free-standing composite gel.

According to the process of the present invention, a unique interpenetrating polymer network molecular structure is obtained, because gelation occurs in a mixed solution of a polyamic acid and a high polymer component and molecular chains of both components uniformly entangled in the solution, and in such a state a high polymer gel is formed. In the gel the high polymer chains are interpenetrated into the polyamic acid network molecular structure. Because of the unique structure thereof, the thus obtained polyamic acid composite also has unique properties.

Polyamic acids and polyimides for use as the high polymer component include all polymers which can be formed through the combination of the aforementioned typical examples of tetracarboxylic acid dianhydrides and aromatic diamines. Typical examples of commercially available high polymer components include , Torlon (manufactured by Mitsubishi Chemical Industries Ltd.) and the like as polyamideimides, ULTEM (manufactured by Japan G E Plastics Co., Ltd.) and the like as polyetherimides, Victrex PES (manufactured by ICI) and the like as polyethersulfones, UDEL P-1700 (manufactured by Amoco) and the like as polysulfones, PBI (manufactured by Celanese Corp.) and the like as polybenzimidazoles, ZYTEL (manufactured by Du Pont) and the like as polyamides and Idemitsu Polycarbonate (manufactured by Idemitsu Petrochemical Co., Ltd.) and the like as the source of polycarbonates. (Chemical formulae of these polymers are shown hereinafter.)

The high polymer component is preferably be used in an amount of about 1 to 80% by weight based on the polyamic acid composite.

If the amount of the high polymer component in the polyamic acid composite of the present invention is less than about 1% by weight, no significant effects are obtained from that component with respect to improving physical properties such as the toughness and functional properties such as material separation capacity. The amount of the high polymer component of larger than 80% by weight results in the formation of an imperfect three dimensional network molecular structure of the polyamic acid component which will not yield a free-standing high polymer gel, thus spoiling the effect of the interpenetrating polymer network structure.

Illustrative examples of solvents having the ability to dissolve high polymer components include: amide-based solvents such as N,N-dimethylformamide, N,N-dimethylacetamide and the like; phenols such as cresol, phenol, xylenol and the like; sulfone-based solvents such as dimethylsulfone, tetramethylenesulfone, dimethylsulfoxide and the like; hydrocarbons such as benzene, toluene, xylene, cyclohexane and the like; chlorine-based solvents such as methylene chloride, dichloroethane and the like; and ketones, alcohols, N-methyl-2-pyrrolidone, benzonitrile, pyridine, dioxane, polyphosphoric acid, N,N-diethylaniline and the like. These solvents may be used alone or as a mixture of two or more thereof. If a high polymer component has low solubility in any of these solvents, its solution may be prepared at a high temperature under high pressure.

A polyamic acid composite in which molecular chains of a three dimensional network structure (high molecular gel structure) of a polyamic acid obtained from a tetracarboxylic acid dianhydride, an aromatic diamine and a tri- or tetraamine are interpenetrated with molecular chains of another high polymer component may be prepared for example by either of the following two processes.
(1) A process for the formation of a polyamic acid composite having an interpenetrating polymer network molecular structure (a polyamic acid/high polymer component composite structure) containing less than 97% by weight of an organic solvent based on the weight of the composite, which comprises the steps of;
   (a) preparing a polyamic acid solution obtained by a reaction of a tetracarboxylic acid dianhydride, an aromatic diamine and a tri- or tetraamino compound as the main components,
   (b) mixing a high polymer component in a solid state or dissolved in an organic solvent with the solution of step (a) which is not yet in a gel form, and
   (c) completing gelling of the polyamic acid ingredients in the mixture of step (b).
(2) A process for the formation of a polyamic acid composite which comprises dissolving a tetracarboxylic acid dianhydride, an aromatic diamine and a tri - or tetraamine in an organic solvent solution of a high polymer component.

In addition to the above processes, many other methods are useful such as a process in which dissolution of a solid high polymer component and the reaction for production of a polyamic acid are performed simultaneously and a process in which a high polymer component is added to a polyamic acid solution during the reaction for production of the polyamic acid. Any of these processes may be applicable practically, provided that it can produce a condition in which a high polymer compound is present as a mixture in a three dimensional network molecular structure of a polyamic acid.

An organic solvent for use in the mixing of a polyamic acid obtained from a tetracarboxylic acid dianhydride, an aromatic diamine and a tri- or tetraamino compound with a high polymer component may be used in such an amount that the content of the resulting polyamic acid composite (a polyamic acid/high polymer component composite) in the organic solvent can be adjusted within the range of from about 3 to 40% by weight, preferably from about 5 to 30% by weight, from the point of view of handling. When the content of the polyamic acid composite is lower than about 3% by weight, this would result in insufficient in cross-linking of the obtained product, and if it is higher than about 40% by weight would render mixing of the polyamic acid and high polymer component rather difficult because of the too high solid contents.

According to the process of the present invention, mixing of a polyamic acid and a high polymer component progresses relatively homogeneously when they are used as solutions, which renders possible preparation of a polyamic acid composite having a three dimensional network molecular structure that can keep free-standing capability keeping its gel shape which retain the solvent even in the case of a high mixing ratio of the high polymer component.

Depending on the kind of high polymer components or their preparation conditions, some high polymer components may not dissolve in an organic solvent but will remain in a swollen or dispersed state. In such instance, these insoluble components remain in the resulting polyamic acid composite as relatively large domain structures, thus spoiling the interpenetrating polymer network molecular structure (IPN structure) of the composite in which molecular chains of a three dimensional network molecular structure of a polyamic acid are interpenetrated with molecular chains of the high polymer component.

When the compatibility of a polyamic acid to a high polymer component is not good, phase separation occurs after mixing of these solution of these components or during the step of removal of the solvent, thus resulting in the formation of an nonuniform composite. Even in such a case, a three dimensional network molecular structure (gel) of a polyamic acid composite having free-standing capability can be prepared. In the case of such polyamic acid composites, it seems that at least the polyamic acid ingredient can form a three-dimensionally continued phase even if there is phase separation, because these ingredients form a three dimensional network molecular structure (gel) in the course of composite preparation in an organic solvent.

The curable resin composition which is incorporated into the polyamic acid as a second component is a uncured resin composition which comprises a reactive monomer and/or oligomer as main constituents. The reactive constituents being capable of undergoing curing under exposure to heat, light or electron beam.

The curable resin composition is preferably used in an amount of about 1 to 80% by weight based on the polyamic acid composite. The reason for the selection of this range of amount is the same as that for the high polymer.

The polyamic acid composite containing curable resin composition is preferably produced by mixing the polyamic acid solution with an uncured curable resin composition, or by impregnating a solution of an uncured curable resin composition into a polyamic acid gel.

By removing solvents from the composite and performing dehydration and cyclization of the polyamic acid constituents and curing of the uncured curable resin component, a polymer composite of a polyimide and a cured resin component is obtained which has excellent properties specific to polyimide such as a high heat resistance and also has excellent characteristics inherent to the cured resin component formed.

A preferred method for production of a polyamic acid composite containing a curable resin composition is shown below.
(1) The composite is prepared from polyamic acid solution and a resin composition which comprises a reactive monomer and/or oligomer as the source of an uncured curable resin composition. In this instance, composing of the polyamic acid with the uncured curable resin composition is effected by carrying out the polyaddition reaction in a solution of the uncured curable resin in an organic solvent or by adding the uncured curable resin composition to the polyamic acid solution prepared by a polyaddition reaction but not yet made into a gel form.
(2) Before it starts gelation, the thus prepared mixed solution of the uncured curable resin composition with the polyamic acid is cast on a support or poured into a mold to form a desired molded material such as a film.
(3) The thus cast or poured solution is stood still for at least 1 minute at a temperature of from 0 to 100°C to complete gradual cross-linking reaction of functional groups of the polyamic acid in the organic solvent. In this way, constituents of the polyamic acid are made into a three dimensional network structure and, as the results, a polyamic acid high molecular gel containing an organic solvent and the uncured curable resin component is obtained.
(4) A molded material is obtained by removing the solvent from the thus prepared polyamic acid high molecular gel containing the organic solvent and the uncured curable resin component.
(5) A polyamic acid composite containing a curable resin composition may be subjecgted to curing of the uncured curable resin component in the thus molded material.

The polyamic acid composite may contain other additives as the third component such as metal compounds, low molecular weight organic compounds, inorganic fillers, coloring agents, reinforced fibers and the like as the third component. They are incorporated into the composite preferably prior to completion of gelation. When the additive is incorporated as a solution it may also incorporated into the composite after completion of gelation.

The thus prepared polyamic acid composite is a high polymer gel which contains an organic solvent usually in an amount of not exceeding 97% by weight. When the organic solvent is removed from the polyamic acid composite by drying, the aggregated molecular chains in the dried composite keep the same molecular structure as in the gel which includes solvent. The polyamic acid composite of the present invention, therefore, has a structure which can repeatly undergo swelling and shrinkage by the absorption and desorption of a solvent.

Drying of the polyamic acid composite gel, including vacuum drying, may preferably be performed at a temperature of not exceeding about 100°C. The drying temperature of higher than 100°C alters the gel structure, because conversion of the polyamic acid into an imide form would gradually occur as the drying time lengthens.

The dried polyamic acid composite possesses unique properties because of its specific molecular structure in which at least a portion thereof exists as a three-dimensionally continued phase. The polyamic acid composite may be obtained in a state of, for example, fibers and films.

A film of the polyamic acid composite of the present invention may be obtained, for example, by the following process. First, a solution of the polyamic acid composite is cast on a flat support to complete formation of the three dimensional network molecular structure. In this way, a gel film of the polyamic acid composite having free-standing capability and containing an organic solvent in an amount of not exceeding about 97% by weight is obtained. Thereafter, the solvent is removed from the gel by heating it at a temperature of 100°C or below and at an atmospheric pressure or under reduced pressure to obtain a solvent-free polyamic acid composite film.

The organic solvent in the gel film of the polyamic acid composite obtained as above may also be removed or washed out by immersion the gel film in a coagulation bath of a poor solvent for the polyamic acid composite and exchanging the organic solvent by the poor solvent.

In this instance, water, alcohols such as methanol and ethanol and ketones such as acetone may be used as the coagulation solution alone or as a mixture of two or more thereof. A small portion of amide-based solvents such as N,N-dimethylacetamide and chlorine-based solvents such as 1,2-dichloroethane may be added to the coagulation solution. A solvent which harms the form of the polyamic acid composite by dissolving or swelling the composite should not be used as the coagulation solution.

The polyamic acid composite of the present invention is obtained by a novel method and has a novel interpenetrating polymer network structure which cannot be obtained from usually used polymer mixture systems without a step for the formation of a high polymer gel.

Because of the novel interpenetrating polymer network structure, the polyamic acid composite possesses of unique properties and has both the characteristics of the polyamic acid and the high polymer component. With regard to the function of this composite, it has material separation abilities and stimulus-responding capacities, because it can repeatly undergo swelling and shrinkage corresponding to the absorption and desorption of solvents and can change its conditions depending on external stimula such as temperature. Also, the polyamic acid composite is useful as a precursor of a polyimide composite which can provide a toughened molded material having an excellent heat resistance.

A polyimide composite in which molecular chains of the polyamic acid and the high polymer component or a curable resin composition can be produced from the polyamic acid described hereinabove.

A polyimide composite is obtained by imidation, that is, by dehydration and cyclization of the polyamic acid composite of the present invention. When the composite contains a curable composition, curing of the uncured resin composition can be carried out before, during or after imidation. The thus obtained polyimide composite has a unique interpenetrating polymer network molecular structure and also possesses unique properties.

The gel of the polyamic acid composite of the present invention contains preferably about 60 to 97% by weight of the organic solvent based on the total amount of the gel.

For the purpose of obtaining a polyimide composite in a state of a molded product such as a film, it is desirable to reduce the content of the solvent to about 0 to 50% by weight, preferably about 40% by weight or less, by removing the solvent at a temperature of about 100°C or below and at atmospheric pressure or under reduced pressure, and then to perform dehydration and cyclization of the polyamic acid composite having such a reduced amount of solvent to complete its conversion into imide form.

Further, a polyimide film can be obtained in the following manner. The gel film of the polyamic acid which contains the solvent is immersed in a coagulating bath comprising a poor solvent for the polyamic acid, whereby the organic solvent left in the film is removed by the substitution of the solvent or the washing of the film is carried out. Thereafter, the film is peeled off from the support and treated at a high temperature or chemically treated to obtain a polyimide composite film. In this operation, water is generally used as a coagulating liquid. Alcohols such as methanol and ethanol may be used with water in an amount of not more than 50% by weight based on the total amount of the coagulating liquid. Further, ketones such as acetone, amide solvents such as N,N-dimethylacetamide and chlorine-containing solvents such as 1,2-di-chloroethane may be used in an amount of not more than 20% by weight based on the total amount of the coagulating liquid.

Conversion of polyamic acid in the polyamic acid composite into the imide form may be effected by any usually used means for the production of polyimide resins. That is, a polyimide composite may be obtained by dehydration and cyclization of a polyamic acid component using high temperature or a chemical treatment.

In the case of a high temperature treatment, for example, a polyamic acid composite may be dried at a temperature of from about 50 to 200°C for at least about 10 seconds to reduce the solvent to about 0 to 50% and then further heated at a high temperature of from about 150 to 500°C, preferably from about 200 to 450°C for about 30 to 300 minutes until the imidation of polyamic acid component is completely finished. A composite film having a high dimensional stability and excellent mechanical characteristics may be obtained when both ends of a film are fixed using a set of fixing frames, zippers, pin guides or the like prior to the heat treatment.

Dehydration and cyclization of polyamic acid may also be effected by chemical treatment, for example, by immersion of a polyamic acid composite in a solution of a dehydrating agent for penetrating the dehydrating agent in the composite.

Such chemical dehydration and cyclization may be completed effectively when an amine is used as a catalyst and an acid anhydride is used as a dehydrating agent. As the acid anhydride, aliphatic acid anhydrides such as acetic anhydride, propionic anhydride, butyric anhydride and the like and aromatic acid anhydrides such as benzoic anhydride may be used alone or as a mixture of two or more thereof.

The amines to be used as the catalyst may be at least one tertiary amine selected from the group consisting of trimethylamine, triethylamine, triethylenediamine, tributylamine, dimethylaniline, pyridine, α-picoline, β-picoline, γ-picoline, isoquinoline, lutidine and the like.

The acid anhydride for use in the chemical dehydration reaction may be used in an amount of from 1 to 5 equivalents, preferably from 1 to 3 equivalents per equivalent of carboxyl groups in the polyamic acid. The catalyst may be used in an amount of from 0.01 to 1.5 equivalents, preferably from 0.2 to 1 equivalent per equivalent of carboxyl groups in the polyamic acid.

In the polyamic acid composite gel of the present invention, a polyamic acid as its main component is considered to have a three dimensional network molecular structure which results principally from covalent bonding, and such a structure gives the composite a gel form which has free-standing capability at room temperature. Imidation of such a polyamic acid is completed by the aforementioned high temperature treatment or a chemical dehydration reaction, and the resulting polyimide composite acquires a molecular structure in which the polyimide is impregnated with a high polymer component to form an interpenetrating polymer network molecular structure (IPN structure). As a result, the thus obtained polyimide composite shows unique properties in having specific characteristics of the polyimide such as heat resistance and also those inherent to the high polymer component. By such a process, a composite film can be prepared which has a homogeneous polyimide/high polymer component composition and therefore has unique properties.

A composite film prepared by performing the imidation while maintaining the three dimensional network molecular structure (gel) of the polyamic acid appears to have a specific molecular structure at a microscopic level. As a consequence, a polyimide composite film having unique properties is obtained as a porous coagulation film when prepared by a mechanical treatment such as drawing or by solvent exchange in a coagulation bath.

A polyamic acid as the polyimide precursor is preferably prepared from the tetracarboxylic acid dianhydride, and the aromatic diamine shown below.

Pyromellitic acid dianhydride, benzophenonetetracarboxylic acid dianhydride and biphenyltetracarboxylic acid dianhydride may be used alone or as a mixture of two or more thereof as preferred source of tetracarboxylic acid dianhydrides from the viewpoint of obtaining a polyimide composite having high heat resistance and excellent mechanical characteristics.

Metaphenylenediamine, paraphenylenediamine, diaminodiphenylmethane and diaminodiphenyl ether (e.g., 4,4'-diaminodiphenyl ether) may be used alone or as a mixture of two or more thereof as preferred source of aromatic diamines from the viewpoint of obtaining a polyimide composite having high heat resistance and excellent mechanical characteristics.

The polyimide composite may be obtained in various shapes such as fibers and films.

The polyimide composite may contain other additives such as metal compounds, low molecular weight organic compounds, inorganic fillers, coloring agents, reinforced fibers and the like as described hereinbefore. These additives usually incorporated to the polyimide composite prior to imidation of the polyamic acid.

The polyimide composite of the present invention is obtained by dehydration and cyclization of a precursor which has a novel interpenetrating polymer network molecular structure and is prepared by a novel means. Consequently, the polyimide composite has a novel interpenetrating polymer network structure which cannot be obtained from conventional polymer mixture systems and can be made into a toughened molded material or product having an excellent heat resistance.

In addition, the polyimide composite can be used as a functional high molecular material which can show material separation abilities and stimulus-responding capacities, by modifying the high polymer component in the composite by solvent or high temperature treatment.

Examples of the present invention are given below by way of illustration and not by way of limitation.

Chemical structures of compounds used in Examples are shown at the end of Examples.

### EXAMPLE 1

A four neck distillation flask of 300 ml capacity was charged with 1.816 g of purified paraphenylenediamine (to be referred to as "PPD" hereinafter) and 0.633 g of 3,3',4,4'-tetraaminobiphenyl tetrahydrochloride dihydrate (to be referred to as "TABT" hereinafter). The flask was further charged with 50 g of distilled N,N-dimethylacetamide (to be referred to as "DMAc" hereinafter) and the above two compounds were dissolved in the distilled solvent by stirring.

The flask was then put on a water bath controlled at a temperature of 5°C and charged with 4.366 g of purified absolute pyromellitic acid dianhydride (to be referred to as "PMDA" hereinafter) gradually (over 30 minutes) in a solid form with stirring under a nitrogen gas atmosphere, taking care to avoid any increase in the temperature of the solution. After completion of the addition of PMDA, stirring was continued for about 15 minutes to obtain a homogeneous polyamic acid solution.

Separately, 6.816 g of a commercial polyamideimide resin (Torlon 4000T, manufactured by Mitsubishi Chemical Industries Ltd.) was dissolved in 50 g of distilled DMAc in a 300 ml capacity beaker.

When the polyamideimide resin was completely dissolved, the resin solution was added to the above polyamic acid solution comprising PMDA, PPD and TABT, and the resulting mixture was stirred at 5°C to obtain a homogeneously mixed solution of polyamic acid and polyamideimide resin.

The thus obtained mixed solution was cast on a glass plate. The layer of the solution was controlled using a spacer so as to a thickness of about 0.4 mm. When allowed to stand for a while, the mixed solution cast on the glass plate started to undergo gelation. Thus, a polyamic acid composite gel film was obtained.

The thus obtained polyamic acid composite gel film has a free-standing capability, because its shape did not change by its own weight.

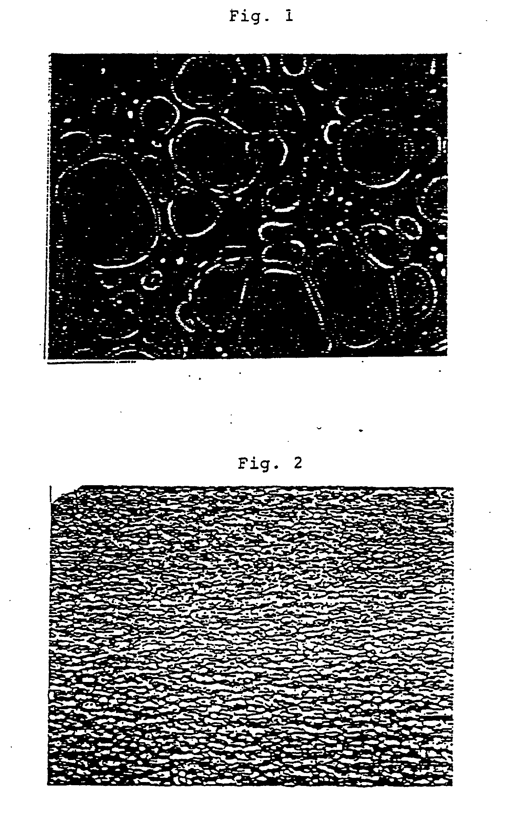

The polyamic acid composite gel film was subjected to vacuum drying at 30°C to evaporate the solvent in the gel film, and the resulting dry film was peeled from the glass plate. Infrared absorption spectrum analysis confirmed that this gel film was a mixture of a polyamic acid and a polyamideimide resin. Observation of the macroscopic structure of the film with a phase contrast microscope confirmed that the film had an interpenetrating polymer network molecular structure as shown in Fig. 1.

When the gel film was immersed in the DMAc solvent, it swelled but maintained its film shape without dissolving in the solvent.

### COMPARATIVE EXAMPLE 4

A four neck distillation flask of 300 ml capacity was charged with 2.162 g of purified paraphenylenediamine. The flask was further charged with 50 g of distilled N,N-dimethylacetamide and the above compound was dissolved in the distilled solvent by stirring.

The flask was then put on a water bath controlled at a temperature of 5°C and charged with 4.366 g of purified pyromellitic acid dianhydride in a solid form gradually with stirring under a nitrogen gas atmosphere, taking care to avoid any increase in the temperature of the solution. Thus, a homogeneous polyamic acid solution was obtained.

Separately, 6.528 g of a commercial polyamideimide resin (Torlon 4000T, manufactured by Mitsubishi Chemical Industries Ltd.) was dissolved in 50 g of distilled DMAc in a 300 ml capacity beaker.

When the polyamideimide resin was completely dissolved, the resin solution was added to the above polyamic acid solution to obtain a homogeneously mixed solution of polyamic acid and polyamideimide resin.

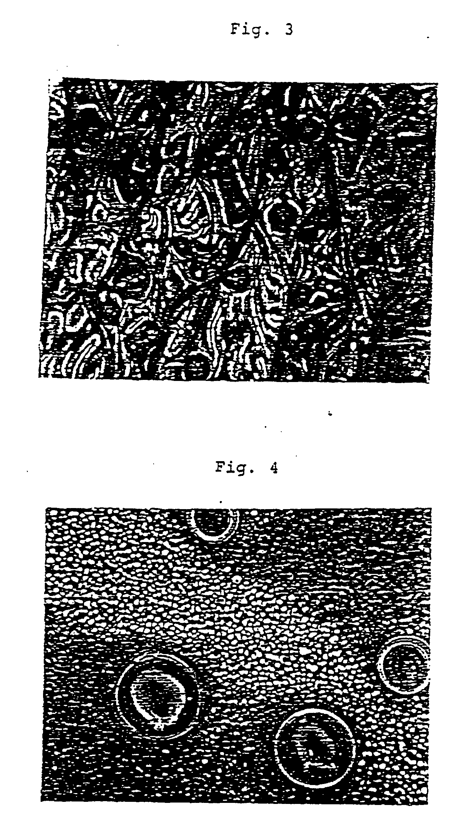

The thus obtained mixed solution was cast on a glass plate in the same manner as in Example 1, but the solution did not undergo gelation and was still in a liquid state even after 5 hours of standing at room temperature. As shown in Fig. 2, macroscopic structure of a film prepared by removing the solvent from the mixed solution cast on the glass plate was completely different from that of the gel film obtained in Example 1.

### EXAMPLE 2

A four neck distillation flask of 300 ml capacity was charged with 1.513 g of purified paraphenylenediamine, 0.721 g of 4,4'-diaminodiphenyl ether (to be referred to as "4,4'-DPE" hereinafter) and 0.475 g of 3,3',4,4'-tetraaminobiphenyl tetrahydrochloride dihydrate. The flask was further charged with 50 g of distilled N-methyl-2-pyrrolidone (to be referred to as "NMP" hereinafter) and the above three compounds were dissolved in the distilled solvent by stirring.

The flask was then put on a water bath controlled at a temperature of 5°C and charged with 4.366 g of purified pyromellitic acid dianhydride in a solid form gradually with stirring under a nitrogen gas atmosphere, taking care to avoid any increase in the temperature of the solution.

Separately, 7.075 g of a commercial polyetherimide resin (ULTEM, manufactured by Japan G E Plastics Co., Ltd.) was dissolved in 50 g of distilled NMP in a 300 ml capacity beaker.

Thereafter, a mixed solution of polymers and a polyamic acid composite were prepared and their properties were evaluated in the same manner as in Example 1. A gel film having free-standing capability was obtained from this polyamic acid composite.

### EXAMPLE 3

A four neck distillation flask of 300 ml capacity was charged with 2.480 g of purified 4,4'-diaminodiphenyl ether and 0.396 g of 3,3',4,4'-tetraaminobiphenyl tetrahydrochloride dihydrate. The flask was further charged with 40 g of distilled N,N-dimethylacetamide and the above two compounds were dissolved in the distilled solvent by stirring.

The flask was then put on a water bath controlled at a temperature of 5°C and charged with 3.056 g of purified pyromellitic acid dianhydride in a solid form gradually with stirring under a nitrogen gas atmosphere, taking care to avoid any increase in the temperature of the solution.

Another four neck distillation flask of 300 ml capacity was charged with 1.168 g of purified 1,4-bis(4-aminophenoxy)benzene (to be referred to as "TPE-Q" hereinafter) and 0.396 g of 3,3',4,4'-tetraaminobiphenyl tetrahydrochloride dihydrate. The flask was further charged with 30 g of distilled N,N-dimethylformamide (to be referred to as "DMF" hereinafter) and the above two compounds were dissolved in the distilled solvent by stirring.

The flask was then put on a water bath controlled at a temperature of 5°C and charged with 1.764 g of purified 3,3',4,4'-biphenyltetracarboxylic acid dianhydride (to be referred to as "BPDA" hereinafter) in a solid form gradually with stirring under a nitrogen gas atmosphere, taking care to avoid any increase in the temperature of the solution.

These two reaction solutions were mixed and stirred at 5°C to obtain a homogeneous mixed solution.

Separately, 9.260 g of a commercial polyethersulfone resin (Victrex PES, manufactured by ICI) was dissolved in 70 g of distilled DMF in a 300 ml capacity beaker.

Thereafter, a mixed solution of polymers and then a polyamic acid composite were prepared therefrom and properties of the composite were evaluated in the same manner as in Example 1. A gel film having free-standing capability was obtained from this polyamic acid complex.

### EXAMPLES 3 TO 7 AND COMPARATIVE EXAMPLES 1 to 3

Four neck distillation flasks of 300 ml capacity were charged with various kinds and amounts of monomers and solvents as shown in Table 1, mixed solutions of polymers and then polyamic acid composites were prepared in the same manner as in Example 1 or Comparative Example 1 and their properties were evaluated.

In every case of Examples 3 to 7 and comparative examples 1 to 3, formation of polyamic acid composite gel was confirmed when each of the mixed solutions of polymers thus prepared was cast on a glass plate and allowed to stand for a while. Also, analyses of infrared absorption spectra confirmed that each of these polyamic acid composites was a composite of a polyamic acid and a high polymer component.

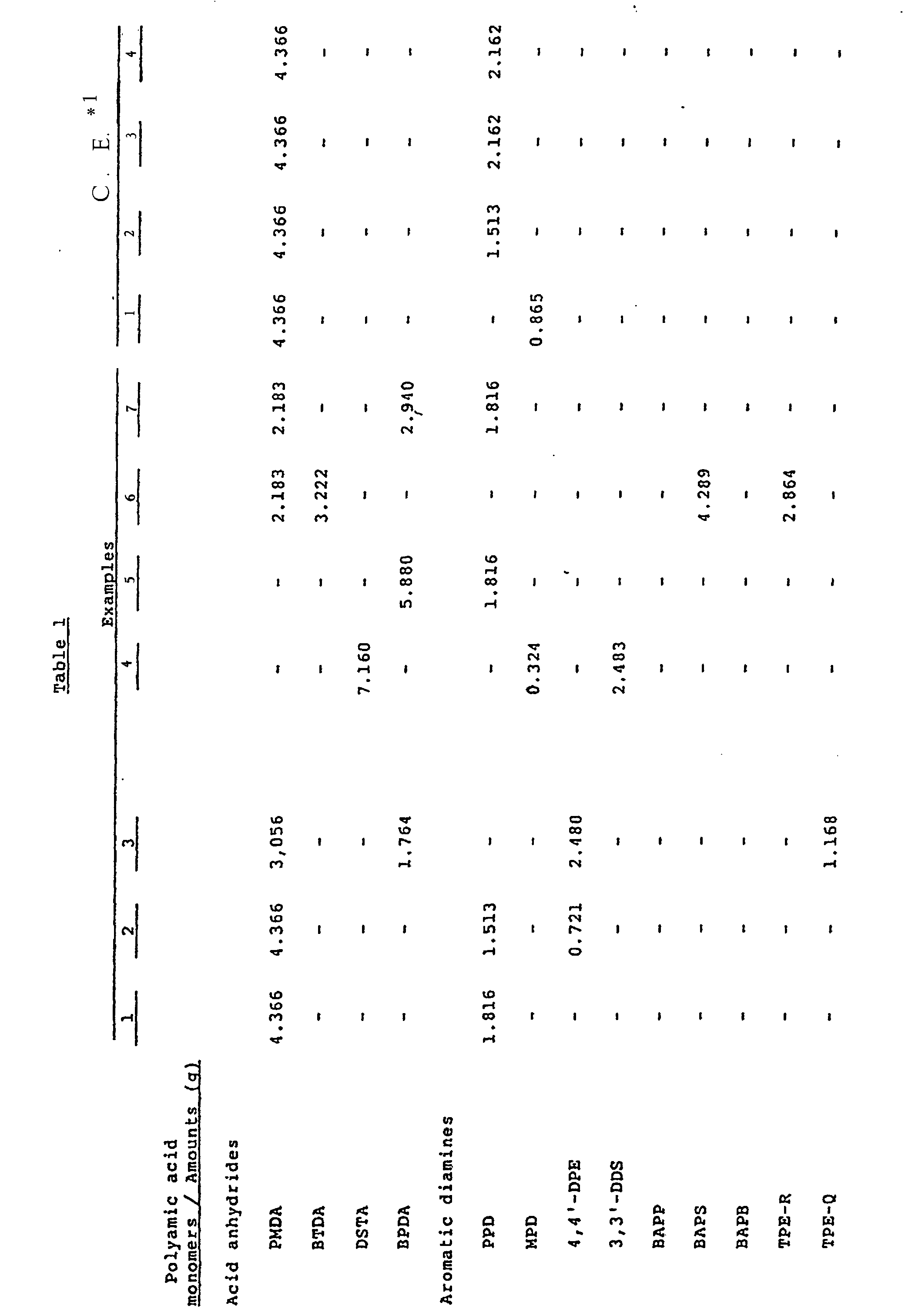

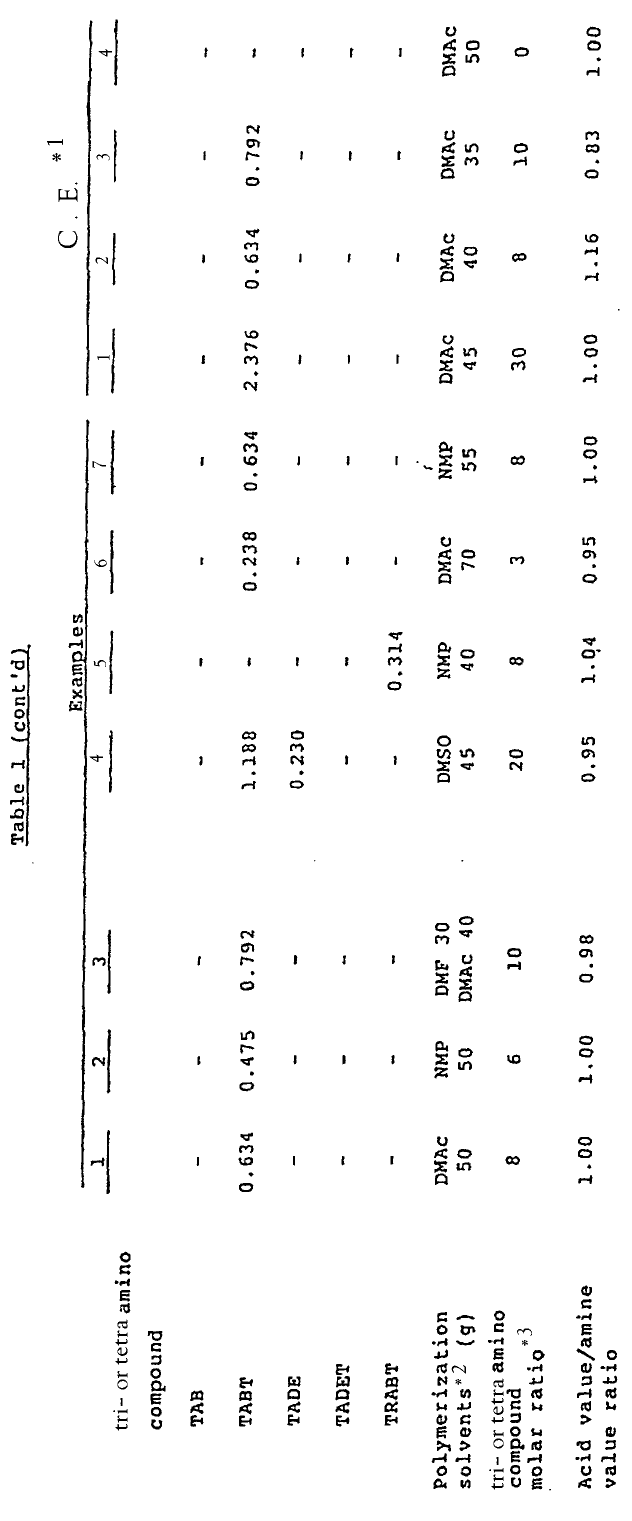

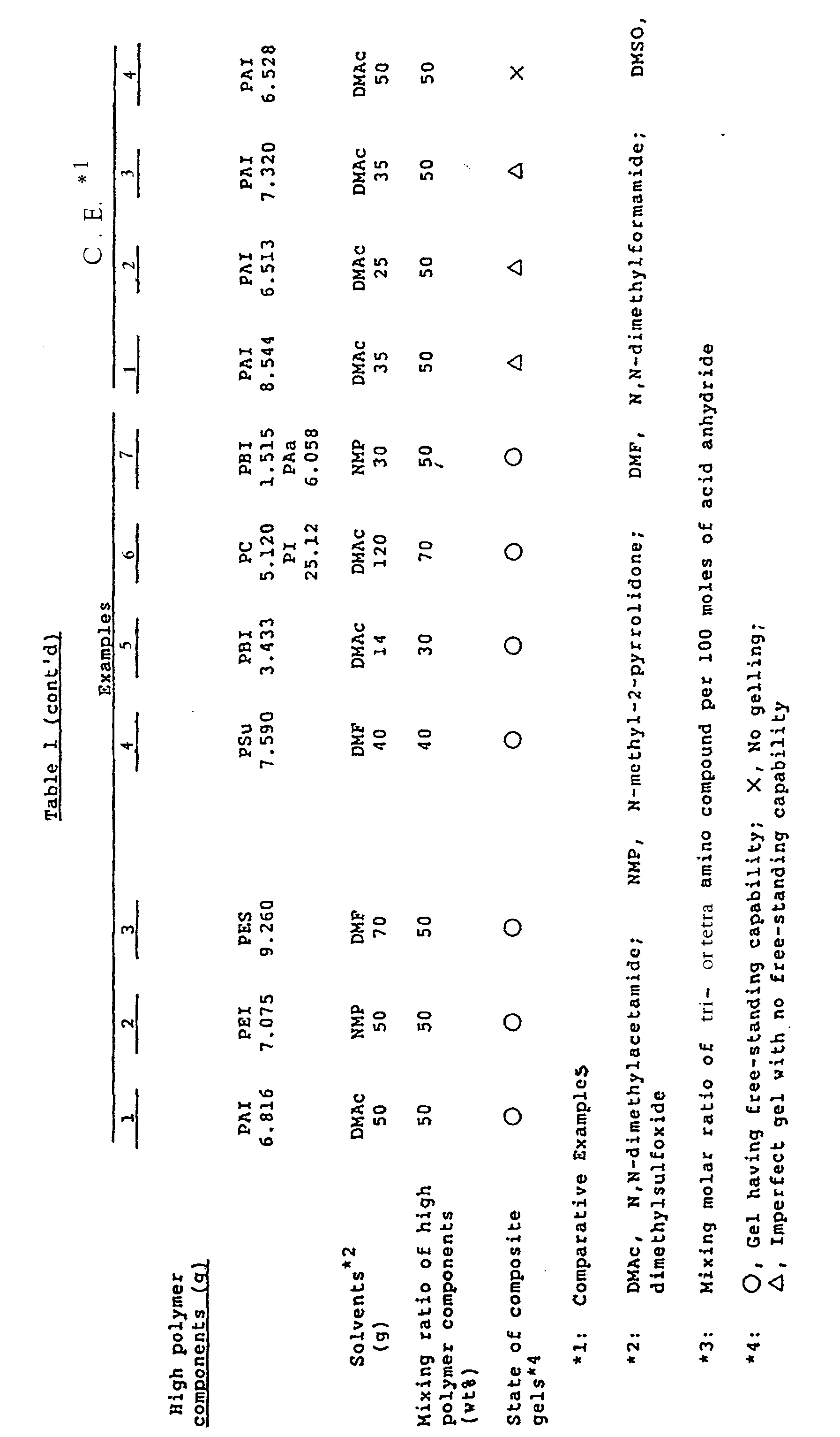

| Name of the high polymer components shown in Tables 1 and 2, and chemical structure thereof | | | |
|---|---|---|---|
| Abbr. | Names | (trade name, manufacturer) | Glass Transition Temp. |
| | | | (°C) |
| PES | Polyethersulfone | (Victrex PES, ICI) | 220-230 |
| PEI | polyetherimide | (ULTEM, Japan GE plastics Co., Ltd.) | 216 |
| PAI | polyamideimide | (Torlon, Mitsubishi Chemical Industries Ltd.) | 280 |
| PSu | polysulfone | (Udel P-1700, UCC) | 190 |
| PBI | polybenzimidazole | (PBI, Celanese Corp.) | 420 |
| PC | polycarbonate | (Idemitsu Polycarbonate, Idemitsu Petrochemical Co., Ltd.) | 153-156 |
| PI | polyimide | (LARC-TPI, Mitsui Toatsu Chemicals, Inc.) | 260-270 |
| PAa | polyamic acid | (a prototype reaction product of PMDA with PPD, Toho Rayon Co., Ltd.) | 80-100 |

Thus, it is apparent that there has been provided, in accordance with the present invention, a high molecular polyamic acid composite having a toughened and multi-functional structure, in which molecular chains of a three dimensional network structure of a polyamic acid obtained from a tetracarboxylic acid dianhydride, an aromatic diamino compound and a tri- or tetraamino compound are interpenetrated with molecular chains of other high polymer component.

### EXAMPLE 8

A four neck distillation flask of 300 ml capacity was charged with 0.503 g of purified paraphenylenediamine (to be referred to as "PPD" hereinafter) and 0.176 g of 3,3',4,4'-tetraaminobiphenyl tetrahydrochloride dihydrate (to be referred to as "TABT" hereinafter). The flask was further charged with 20 g of distilled N-methylpyrrolidone (to be referred to as "NMP" hereinafter) and the above two compounds were dissolved in the distilled solvent by stirring.

The flask was then put on a water bath controlled at a temperature of 5°C and charged with 1.210 g of purified absolute pyromellitic acid dianhydride (to be referred to as "PMDA" hereinafter) in a solid form gradually (over 30 minutes) with stirring under a nitrogen gas atmosphere, taking care to avoid increase in the temperature of the solution. After completion of the addition of PMDA, stirring was continued for about 15 minutes to obtain a homogeneous polyamic acid solution.

Separately from this, 5.667 g of a commercial polyethersulfone resin (Victrex PES, manufactured by I.C.I. Ltd.) was dissolved in 50 g of distilled NMP in a 300 ml capacity beaker.

When the polyethersulfone resin was dissolved completely, the resin solution was added to the above polyamic acid solution comprising PMDA, PPD and TABT, and the resulting mixture was stirred at 5°C to obtain a homogeneously mixed solution of polyamic acid and polyethersulfone resin.

The thus obtained mixed solution was cast on a glass plate. The layer of the solution was controlled using a spacer to a thickness of about 0.4 mm. When stood still for a while, the mixed solution cast on the glass plate started to undergo gelation. In this way, a polyamic acid composite gel film was obtained.

The thus obtained polyamic acid composite gel film showed free-standing capability, because its shape did not change by its own weight.

When the gel film was immersed in the NMP solvent, it swelled but maintained its film shape without dissolving in the solvent.

The thus obtained gel film of the polyamic acid composite was subjected to vacuum drying at 30°C to adjust the solvent content in the film to a level of 10% by weight based on the total weight and then peeled from the glass plate. After drying at 80°C for 60 minutes and then at 120°C for 60 minutes in an oven, the thus dried film was fixed on an iron frame and subjected to a continuous high temperature treatment at 150°C for 1 hour, 200°C for 1 'hour, 300°C for 1 hour and 350°C for 1 hour in that order. In this manner, a homogeneous polyimide composite film having a light reddish brown color with a thickness of about 30 µm was obtained.

By measuring infrared absorption spectra of the thus obtained polyimide composite film, absorption peaks specific to the imido group (1780 cm⁻¹ and 1720 cm⁻¹) were observed, thus confirming the presence of imido groups in the film.

With regard to the properties of this film, temperature required to decrease 5% by weight of the film was measured by thermogravimetric analysis, glass transition temperature was measured by thermomechanical analysis (TMA) and tensile strength was measured by a material testing machine. For the measurement of tensile strength, a strip of test piece with 5 mm in width was cut out of the polyimide film and subjected to the testing machine (distance between chucks, 30 mm; tensile rate, 5 mm/minutes). All measurements were performed at 23°C .

As shown in Table 2, this film showed excellent heat resistance and mechanical characteristics.

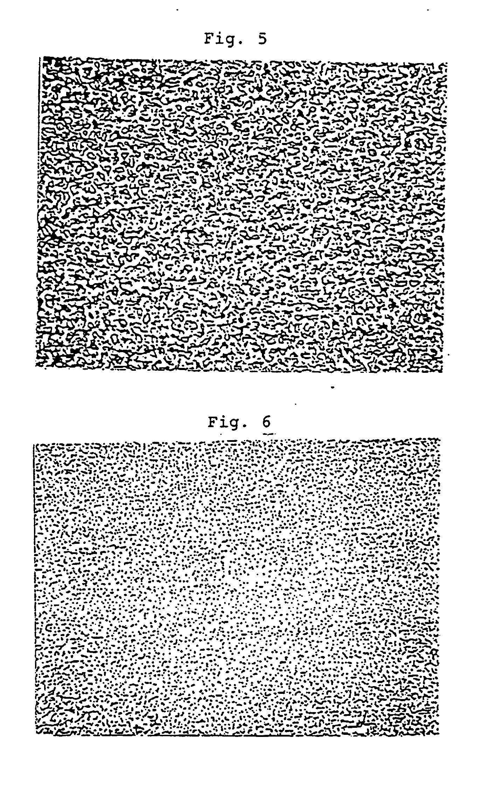

Observation of macroscopic structure of the film under a phase contrast microscope confirmed that this film was possessed of an interpenetrating polymer network molecular structure with a complex phase separation pattern as shown in Fig. 3.

### COMPARATIVE EXAMPLE 5

A four neck distillation flask of 300 ml capacity was charged with 0.599 g of purified paraphenylenediamine. The flask was further charged with 20 g of distilled N-methyl-N-pyrrolidone (NMP) and the above compound was dissolved in the distilled solvent by stirring.

The flask was then put on a water bath controlled at a temperature of 5°C and charged with 1.210 g of purified pyromellitic acid dianhydride in a solid form with gradually stirring under a nitrogen gas atmosphere, taking care to avoid increase in the temperature of the solution. In this way, a homogeneous polyamic acid solution was obtained.

Separately from this, 5.427 g of a commercial polyethersulfone resin (Victrex PES, manufactured by ICI Ltd.) was dissolved in 50 g of distilled NMP in a 300 ml capacity beaker.

When the polyethersuflone resin was dissolved completely, the resin solution was added to the above polyamic acid solution to obtain a homogeneously mixed solution of polyamic acid and polyethersulfone resin.

The thus obtained mixed solution was cast on a glass plate in the same manner as in Example 8, but the solution did not undergo gelation and was still in a liquid state even after 5 hours of standing at room temperature.

A polyamic acid composite film was prepared by removing the solvent from the mixed solution cast on the glass plate. When the film was immersed in NMP solvent, it dissolved in the solvent.

The thus prepared polyamic acid composite film was treated in the same manner as in Example 8 to obtain a polyimide composite film. When properties of the thus obtained composite film were evaluated in the same manner as in Example 8, its thermal characteristics were inferior to those of the film obtained in Example 8 as shown in Table 2. As shown in Fig. 4, macroscopic structure of the film was completely different from that of the film obtained in Example 8.

### EXAMPLE 9

A four neck distillation flask of 300 ml capacity was charged with 1.513 g of purified paraphenylenediamine, 0.721 g of 4,4'-diaminodiphenyl ether (to be referred to as "4,4'-DPE" hereinafter) and 0.475 g of 3,3',4,4'-tetraaminobiphenyl tetrahydrochloride dihydrate. The flask was further charged with 50 g of distilled N-dimethylacetamide (to be referred to as "DMAc" hereinafter) and the above three compounds were dissolved in the distilled solvent by stirring.

The flask was then put on a water bath controlled at a temperature of 5°C and charged with 4.366 g of purified pyromellitic acid dianhydride in a solid form gradually with stirring under a nitrogen gas atmosphere, taking care to avoid increase in the temperature of the solution.

Separately, 7.075 g of a commercial polyetherimide resin (ULTEM, manufactured by Japan G E Plastics Co., Ltd.) was dissolved in 50 g of distilled DMAc in a 300 ml capacity beaker.

When the polyetherimide resin was completely dissolved in the solvent, the resulting solution was added to the aforementioned polyamic acid solution to obtain a homogeneously mixed solution of the polyamic acid and polyetherimide resin.

Thereafter, a polyimide composite was prepared and its properties were evaluated in the same manner as in Inventive Example 8, with the results shown in Table 2.

### EXAMPLE 10

A four neck distillation flask of 300 ml capacity was charged with 2.480 g of purified 4,4'-diaminodiphenyl ether and 0.396 g of 3,3',4,4'-tetraaminobiphenyl tetrahydrochloride dihydrate. The flask was further charged with 40 g of distilled N,N-dimethylacetamide and the above two compounds were dissolved in the distilled solvent by stirring.

The flask was then put on a water bath controlled at a temperature of 5°C and charged with 3.056 g of purified pyromellitic acid dianhydride in a solid form gradually with stirring under a nitrogen gas atmosphere, taking care to avoid increase in the temperature of the solution.

Another four neck distillation flask of 300 ml capacity was charged with 1.168 g of purified 1,4-bis(4-aminophenoxy)benzene (to be referred to as "TPE-Q" hereinafter) and 0.396 g of 3,3',4,4'-tetraaminobiphenyl tetrahydrochloride dihydrate. The flask was further charged with 30 g of distilled N,N-dimethylformamide (to be referred to as "DMF" hereinafter) and the above two compounds were dissolved in the distilled solvent by stirring.

The flask was then put on a water bath controlled at a temperature of 5°C and charged with 1.764 g of purified 3,3',4,4'-biphenyltetracarboxylic acid dianhydride (to be referred to as "BPDA" hereinafter) in a solid form gradually with stirring under a nitrogen gas atmosphere, taking care to avoid increase in the temperature of the solution.

These two reaction solutions were mixed and stirred at 5°C to obtain a homogeneous mixed solution.

Separately, 9.260 g of a commercial polyamideimide resin (Torlon 4000T, manufactured by Mitsubishi Chemical Industries Ltd.) was dissolved in 70 g of distilled DMF in a 300 ml capacity beaker.

When the polyamideimide resin was completely dissolved in the solvent, the resulting solution was added to the aforementioned polyamic acid solution to obtain a homogeneously mixed solution of the polyamic acid and polyamideimide resin.

Thereafter, a polyimide composite was prepared and its properties were evaluated in the same manner as in Example 12, with the results shown in Table 2.

### EXAMPLES 11 TO 14 AND COMPARATIVE EXAMPLE 6

A four neck distillation flasks of 300 ml capacity were charged with various kinds and amounts of monomers and solvents as shown in Table 2, and polyimide composites were prepared in the same manner as in Example 8 or Comparative Example 5 and their properties were evaluated.

In every case of Examples 11 to 14, and comparative example 6, formation of polyamic acid composite gel was confirmed when each of the mixed solutions of polymers thus prepared (polymer concentration, 10 to 20% by weight) was cast on a glass plate and stood still for a while.

As shown in Table 2, every high temperature treated polyimide composite film obtained in the Inventive Examples showed relatively homogeneous structure and markedly high mechanical properties. In this instance, film properties were evaluated using films having 20 to 50 µm in thickness.

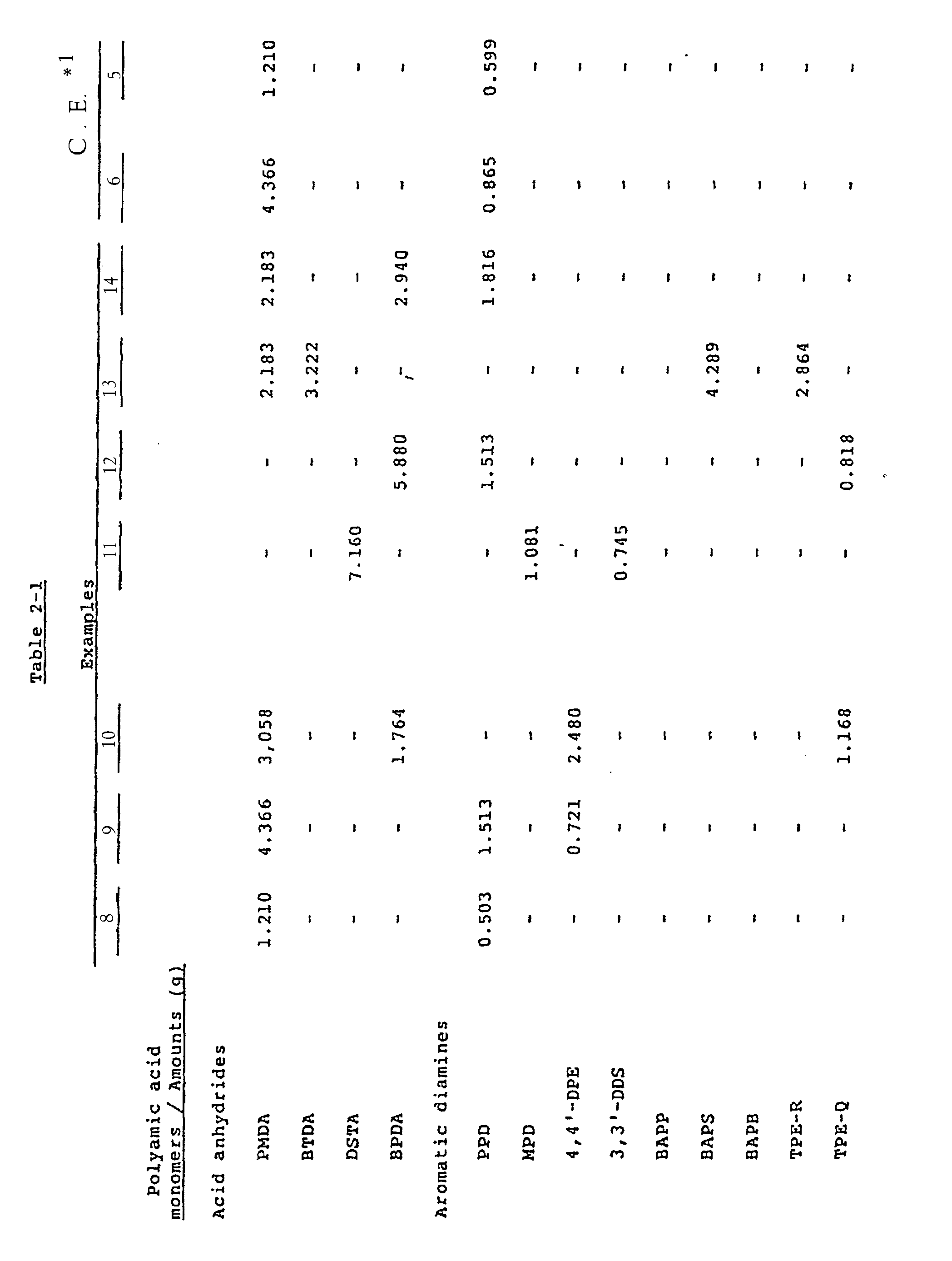

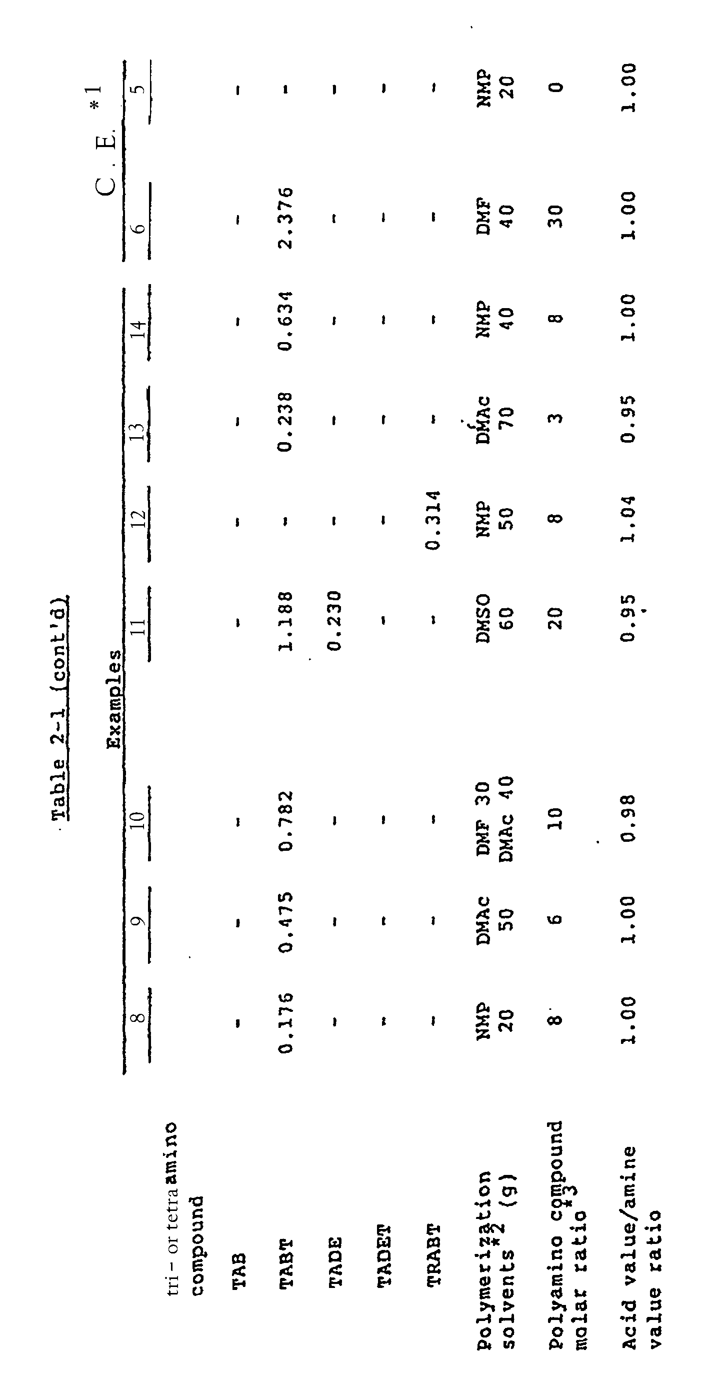

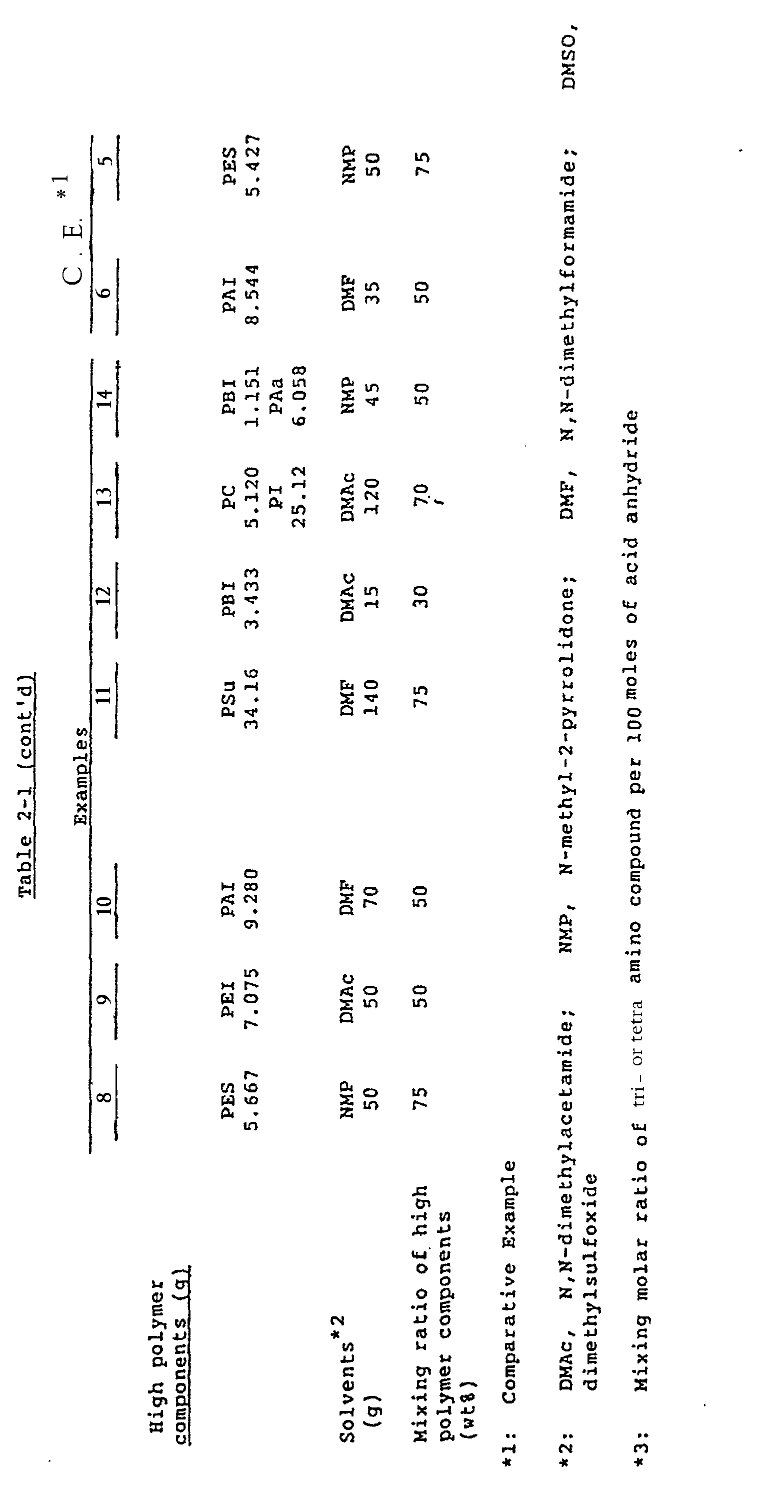

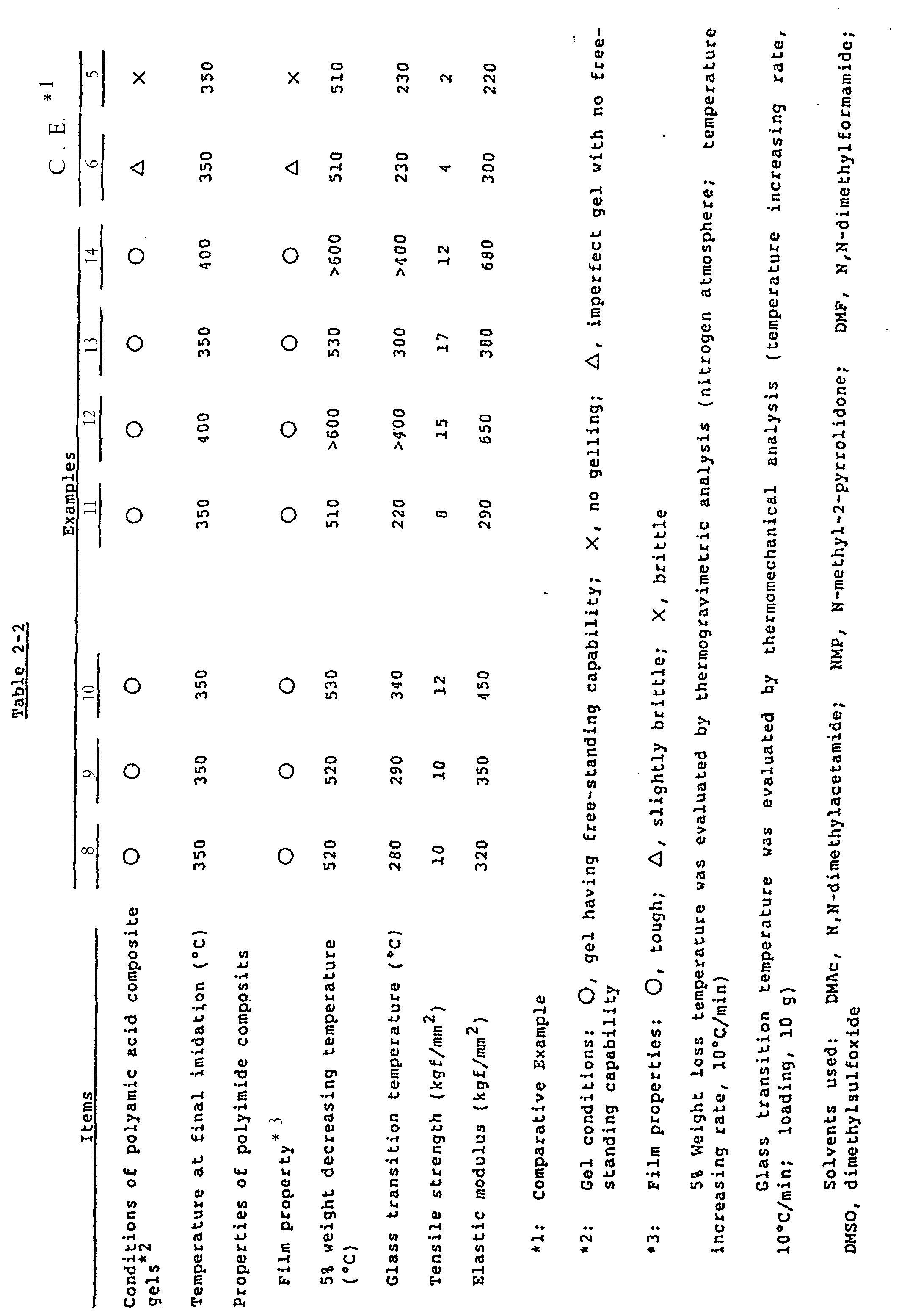

### EXAMPLE 15

A polyamic acid solution was prepared in the same manner as Example 1 except that the monomer components were charged as shown in Table 3-1.

Separately from this, 1.096 g of a commercial epoxy resin (Araldite MY720, manufactured by Ciba-Geigy Ltd.), 0.470 g of another commercial epoxy resin (Epikote 1001, manufactured by Shell Chemicals Co., Ltd.) and 0.657 g of a curing agent (4,4'-diaminodiphenyl sulfone) were dissolved in 10 g of distilled NMP in a 100 ml capacity beaker. When the thus prepared epoxy resin composition was dissolved completely, the resin solution was added to the above polyamic acid solution and the resulting mixture was stirred to obtain a uniformly mixed solution of the polyamic acid and the epoxy resin composition.

The thus obtained mixed solution was cast on a glass plate. The layer of the solution was controlled using a spacer to a thickness of about 0.4 mm. When stood still for a while, the mixed solution cast on the glass plate started to undergo gelation. In this way, a gel film of a composite of the polyamic acid and the epoxy resin (uncured monomer components) was obtained.

The thus obtained polyamic acid composite gel film showed free-standing capability.

The polyamic acid composite gel film was subjected to vacuum drying at 30°C to adjust the content of the solvent in the gel film to 5% by weight based on the whole gel weight, and the resulting dry film was peeled from the glass plate. The thus partially dried gel film was further dried in an oven at 80°C for 60 minutes and then at 120°C for 60 minutes. After fixing on an iron flame, the film was subjected to a continuous high temperature treatment at 150°C for 1 hour, 200°C for 1 hour and 300°C for 1 hour in that order, to complete dehydration and cyclization of the polyamic acid components and curing of the epoxy resin composition. In this way, a uniform polyimide composite film showing a light reddish brown color and having a thickness of about 30 µm was obtained.

By measuring infrared absorption spectra of the thus obtained polyimide composite film, absorption peaks specific to the imido group (1780 cm⁻¹ and 1720 cm⁻¹) were observed, thus confirming the presence of imide groups in the film.

The properties of the composite were measured in the same manner as Example 8 and the thus obtained results are shown in Table 3-2.

As shown in Table 3-2, this film had an excellent heat resistance and good mechanical properties. Observation of macroscopic structure of the film under a phase contrast microscope confirmed that the film had an interpenetrating polymer network structure as shown in Fig. 5.

### COMPARATIVE EXAMPLE 7

Polyamino compounds (tri- or tetraamino) were not used in this comparative example.

A four neck distillation flask of 300 ml capacity was charged with 0.599 g of purified paraphenylenediamine (PPD). The flask was further charged with 20 g of distilled N-methyl-2-pyrrolidone (to be referred to as "NMP" hereinafter) and the above compound was dissolved in the distilled solvent with mixing.

The flask was then put on a water bath controlled at a temperature of 5°C and charged with 1.786 g of purified 3,3',4,4'-benzophenonetetracarboxylic acid dianhydride (BTDA) in a solid form gradually with stirring under a nitrogen gas atmosphere, taking care to avoid increase in the temperature of the solution. In this way, a polyamic acid solution was obtained.

Separately from this, 1.176 g of a commercial epoxy resin (Araldite MY720, manufactured by Ciba-Geigy Ltd.), 0.504 g of another commercial epoxy resin (Epikote 1001, manufactured by Shell Chemicals Co., Ltd.) and 0.705 g of a curing agent (4,4'-diaminodiphenyl sulfone) were dissolved in 10 g of distilled NMP in a 100 ml capacity beaker. When the thus prepared epoxy resin composition was dissolved completely, the resin solution was added to the above polyamic acid solution comprising BTDA and PPD and the resulting mixture was stirred to obtain a uniformly mixed solution of the polyamic acid and the epoxy resin composition.

The thus obtained mixed solution was cast on a glass plate in the same manner as in Example 15, but the solution did not start gelation and was still in a fluid state even after 5 hours of standing at room temperature. When a film was prepared by removing the solvent from the polyamic acid solution cast on the glass plate and the thus prepared film was immersed in the NMP solvent, it dissolved in the solvent.

The thus obtained polyamic acid composite gel film was treated in the same manner as in Example 15 to prepare a polyimide composite film. Properties of the resulting film were evaluated in the same manner as in Example 15, with the results shown in Table 3-2. As is evident from the table, thermal properties of this film were inferior to those of the film obtained in Example 15. As shown in Fig. 6, macroscopic structure of this film observed under a phase contrast microscope was different from that of the film of Example 15.

### EXAMPLE 16

A polyamic acid solution was prepared in the same manner as in Example 2.

Separately, 4.955 g of a commercial bismaleimide resin (BT Resin BT-2160, manufactured by Mitsubishi Gas Chemical Company, Inc.) and 2.120 g of a commercial epoxy resin (Epikote 1001, manufactured by Shell Chemicals Co., Ltd.) were dissolved in 20 g of distilled DMF solvent in a 300 ml capacity beaker. When the bismaleimide and epoxy resins were dissolved completely, the resulting solution was added to the above polyamic acid solution to obtain a uniform mixed solution of the polyamic acid, the bismaleimide resin and the epoxy resin.

Thereafter, a polyimide composite was prepared and its properties were evaluated in the same manner as in Inventive Example 15, with the results shown in Table 3-2.

### EXAMPLE 17

A polyamic acid solution was prepared in the same manner as in Example 3.

Separately from these, 5.93 g of a commercial vinyl ester resin (Lipoxy SP-1506, manufactured by Showa Highpolymer Co., Ltd.), 0.12 g of benzophenone and 0.12 g of dimethylaminoethanol were dissolved in 30 g of distilled DMF in a 300 ml capacity beaker.

When the vinyl ester resins were dissolved completely, the resulting solution was added to the above polyamic acid solution to obtain a uniform mixed solution of the polyamic acid and the vinyl ester resin. A polyamic acid/vinyl ester resin complex gel film was prepared from the thus obtained mixed solution in the same manner as in Example 15. By removing the solvent from the composite gel film, a uniform polyamic acid composite film was obtained. The thus obtained composite film was exposed to light for 10 seconds using a high pressure mercury lamp (output, 80 W/cm) at a distance of 15 cm from the film, in order to cure the vinyl ester resin.

Thereafter, the thus cured composite film was subjected to a high temperature treatment in the same manner as in Example 15 to complete imidation of the polyamic acid components. Properties of this film were evaluated in the same manner as in Example 15, with the results shown in Table 3-2.

### EXAMPLES 18 TO 21

A four neck distillation flasks of 300 ml capacity were charged with various kinds and amounts of monomers and solvents as shown in Table 3-1, and a composite of polyimides and curable resin were prepared in the same manner as in Example 15 and their properties were evaluated.

In every case of Examples 18 to 21, formation of polyamic acid composite gel was confirmed when each of the mixed solutions of polymers thus prepared (polymer concentration, 10 to 20% by weight) was cast on a glass plate and stood still for a while.

As shown in Table 3-2, every high temperature treated polyimide composite film obtained in the Inventive Examples showed relatively homogeneous structure and markedly high mechanical properties. In this instance, film properties were evaluated using films having 20 to 50 µm in thickness.

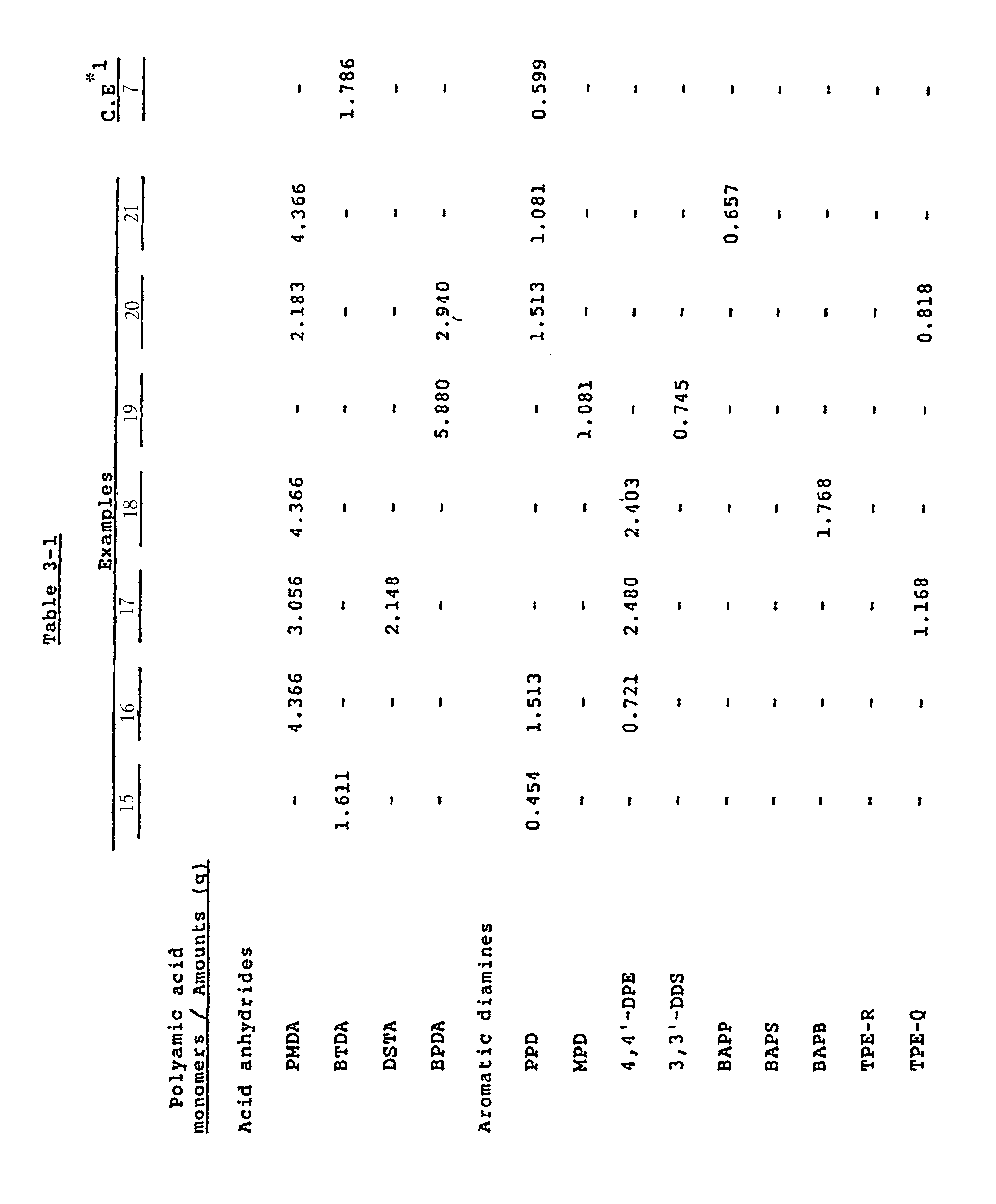

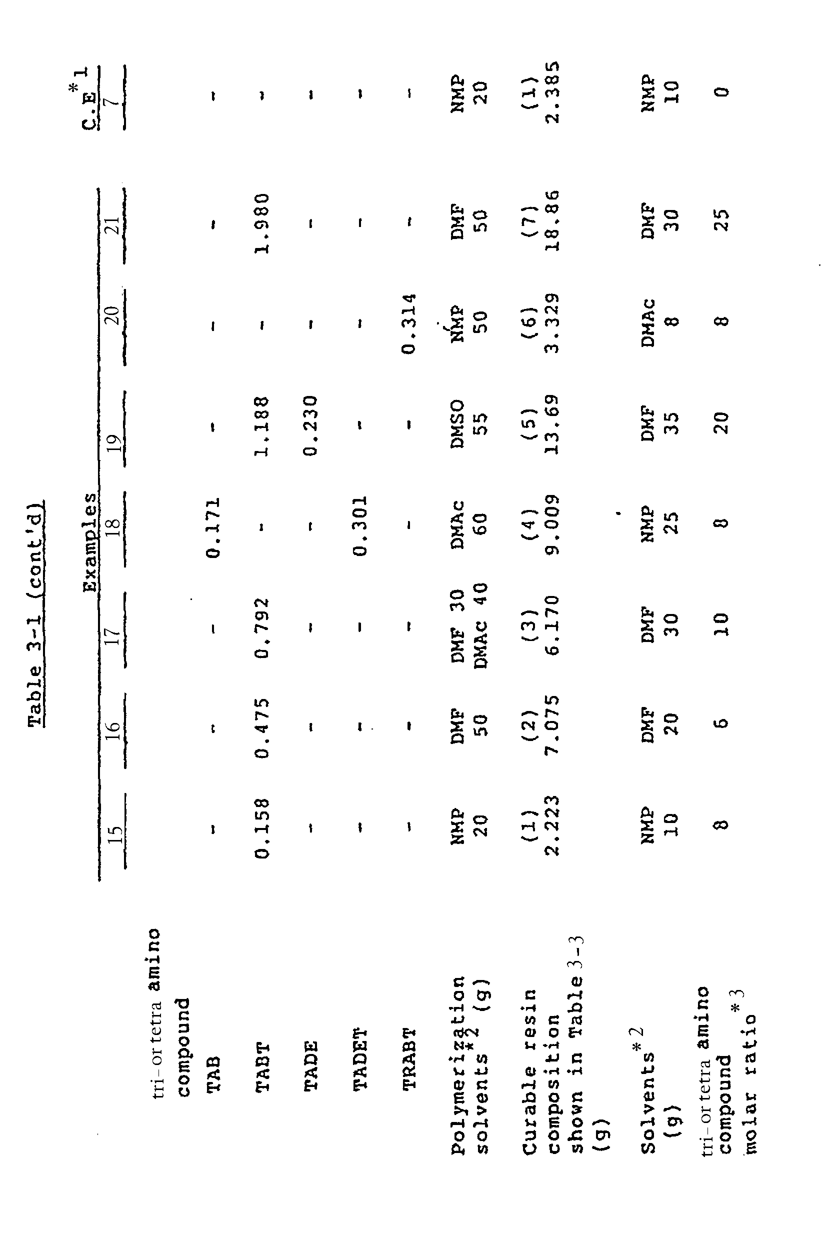

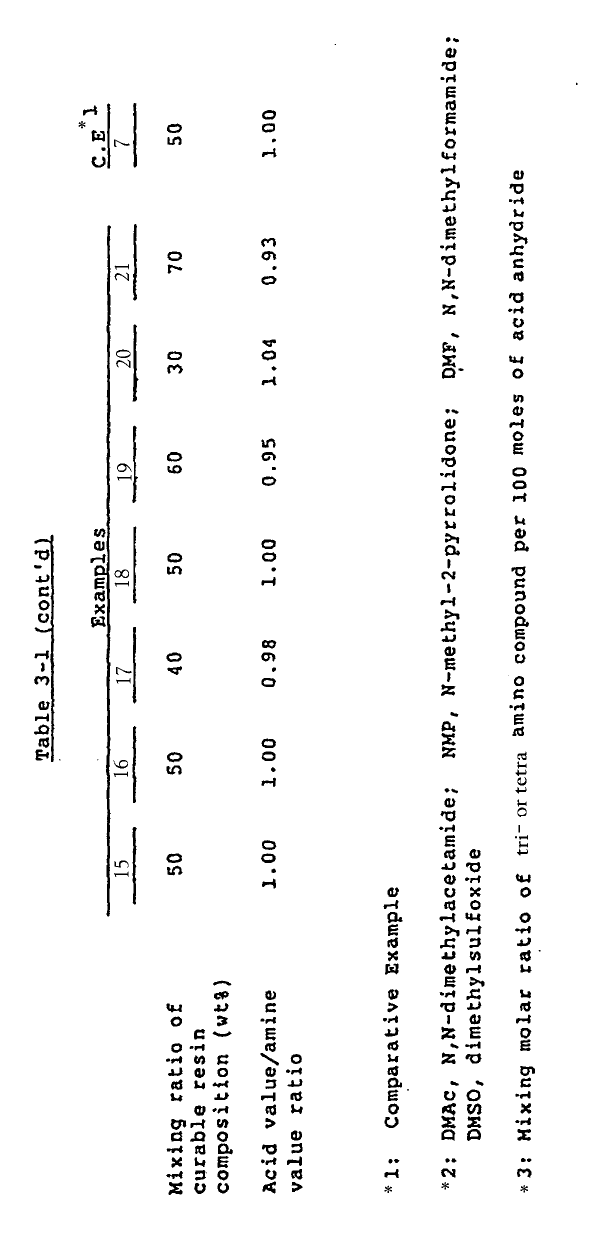

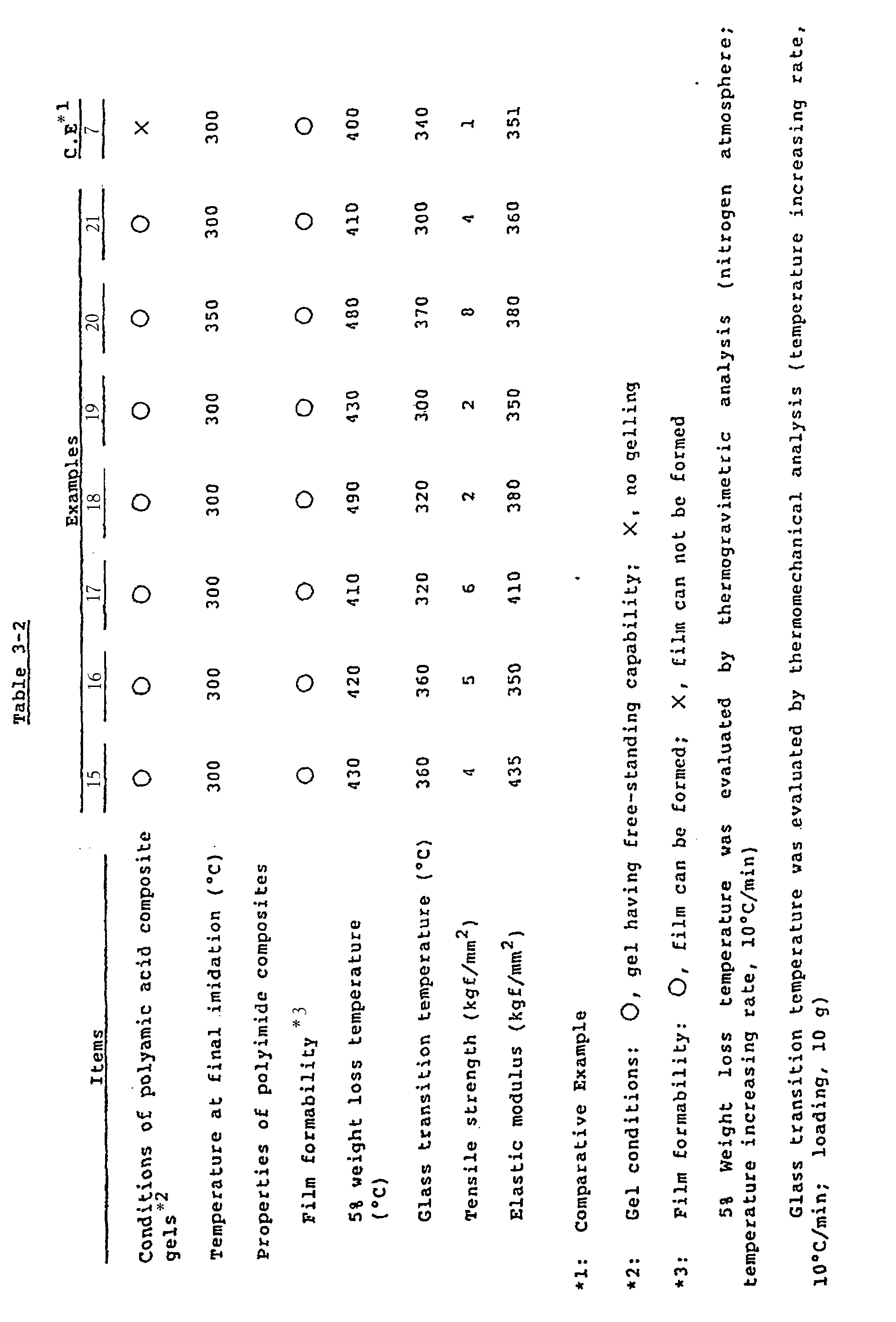

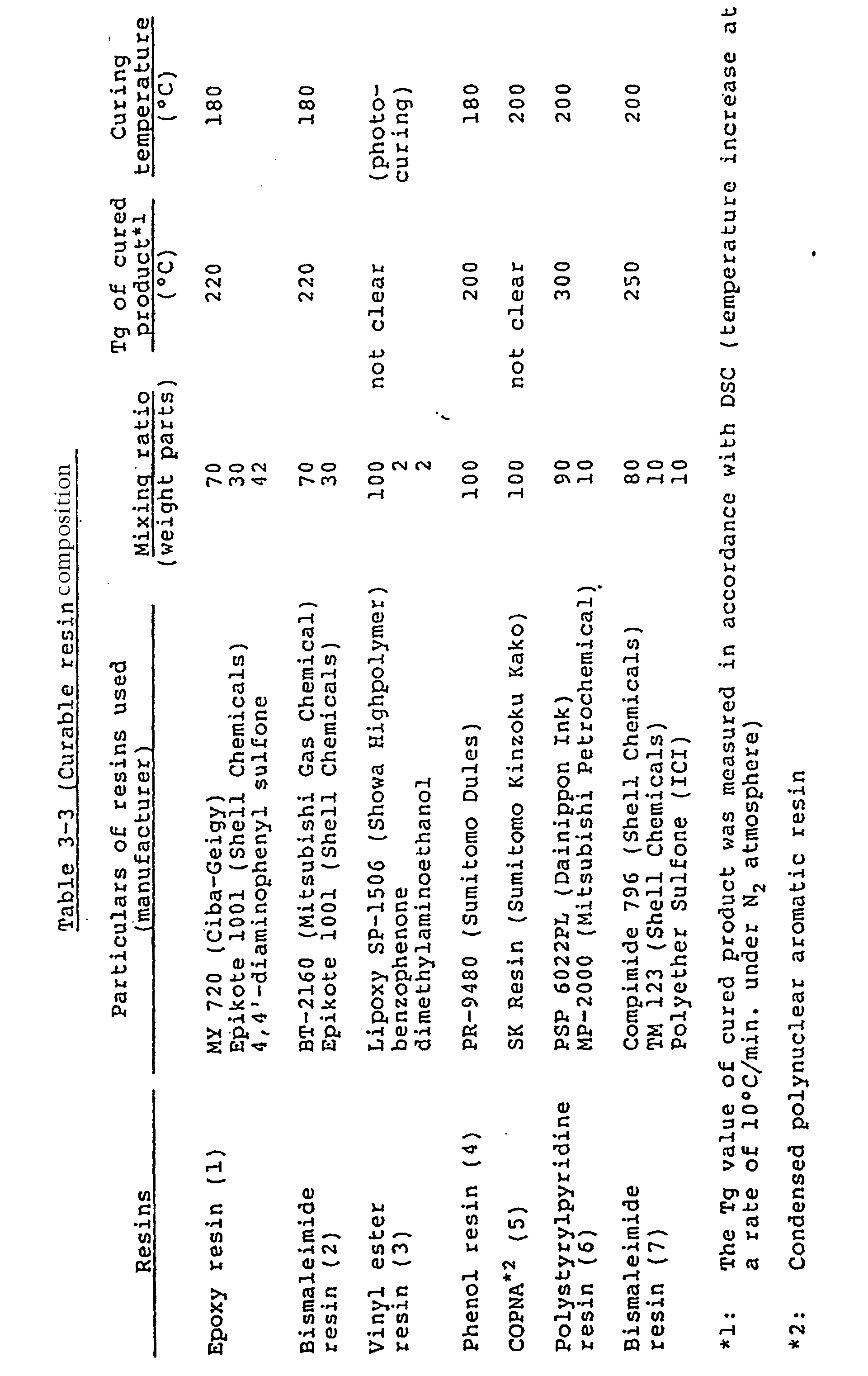

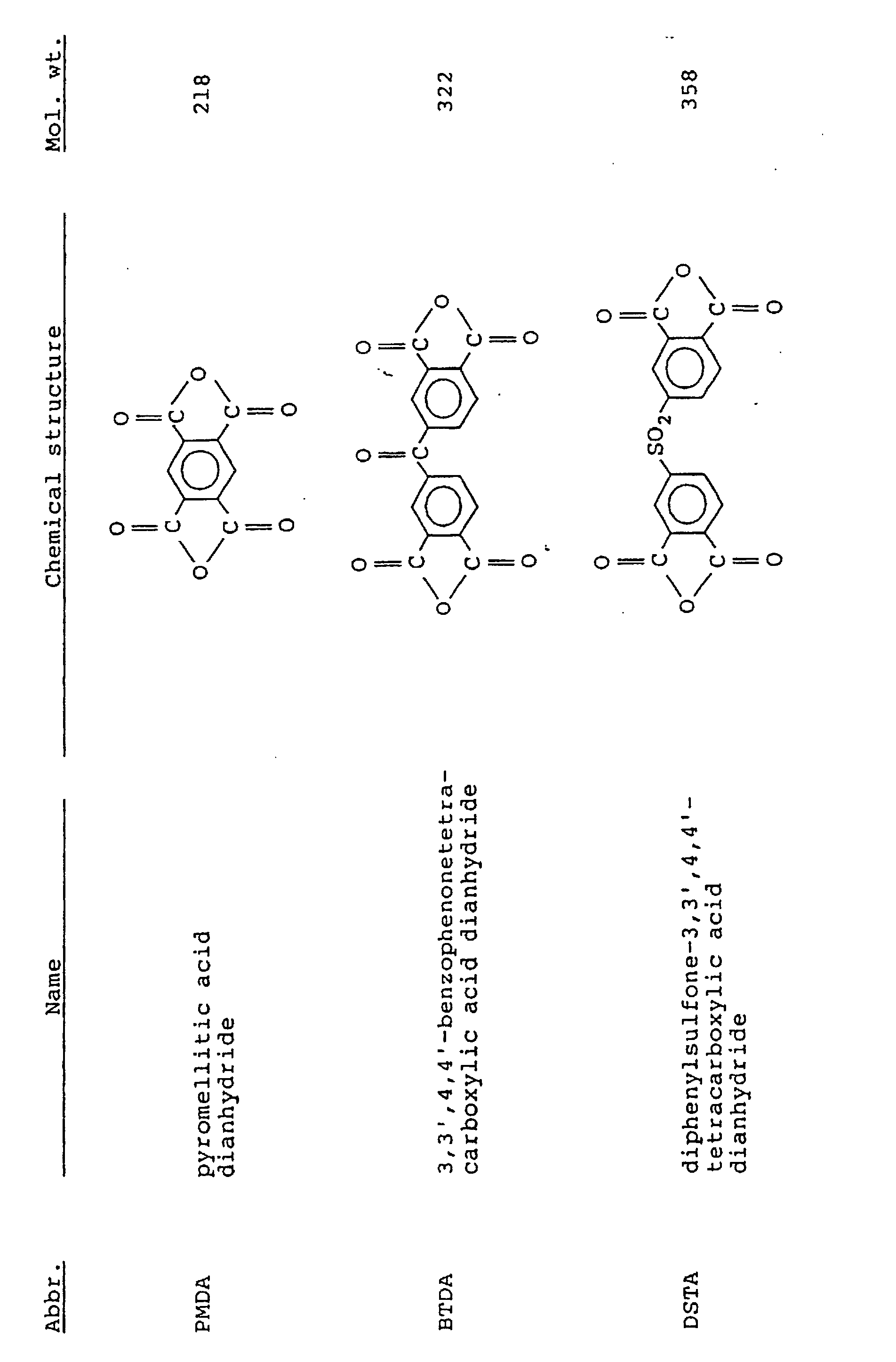

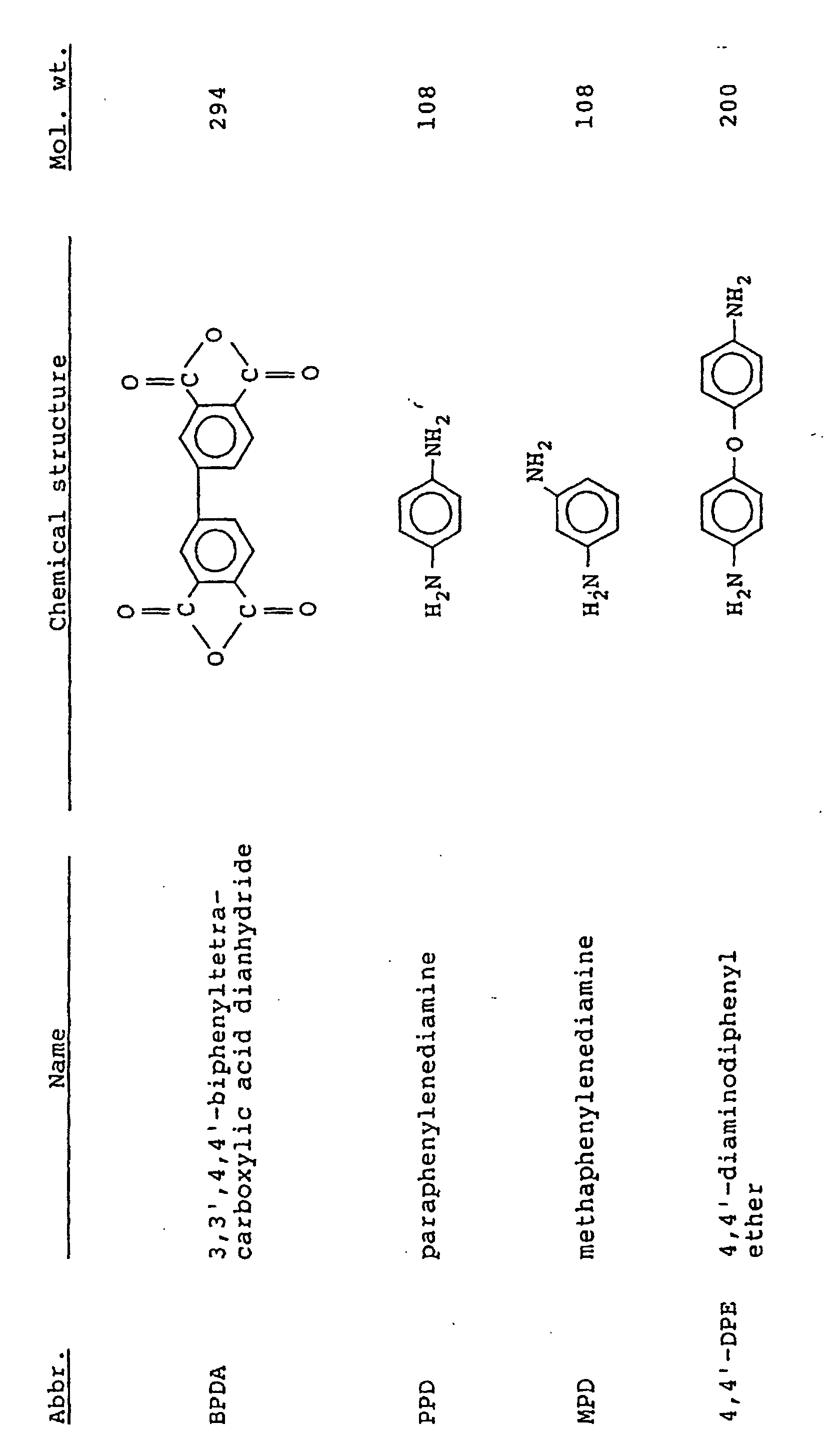

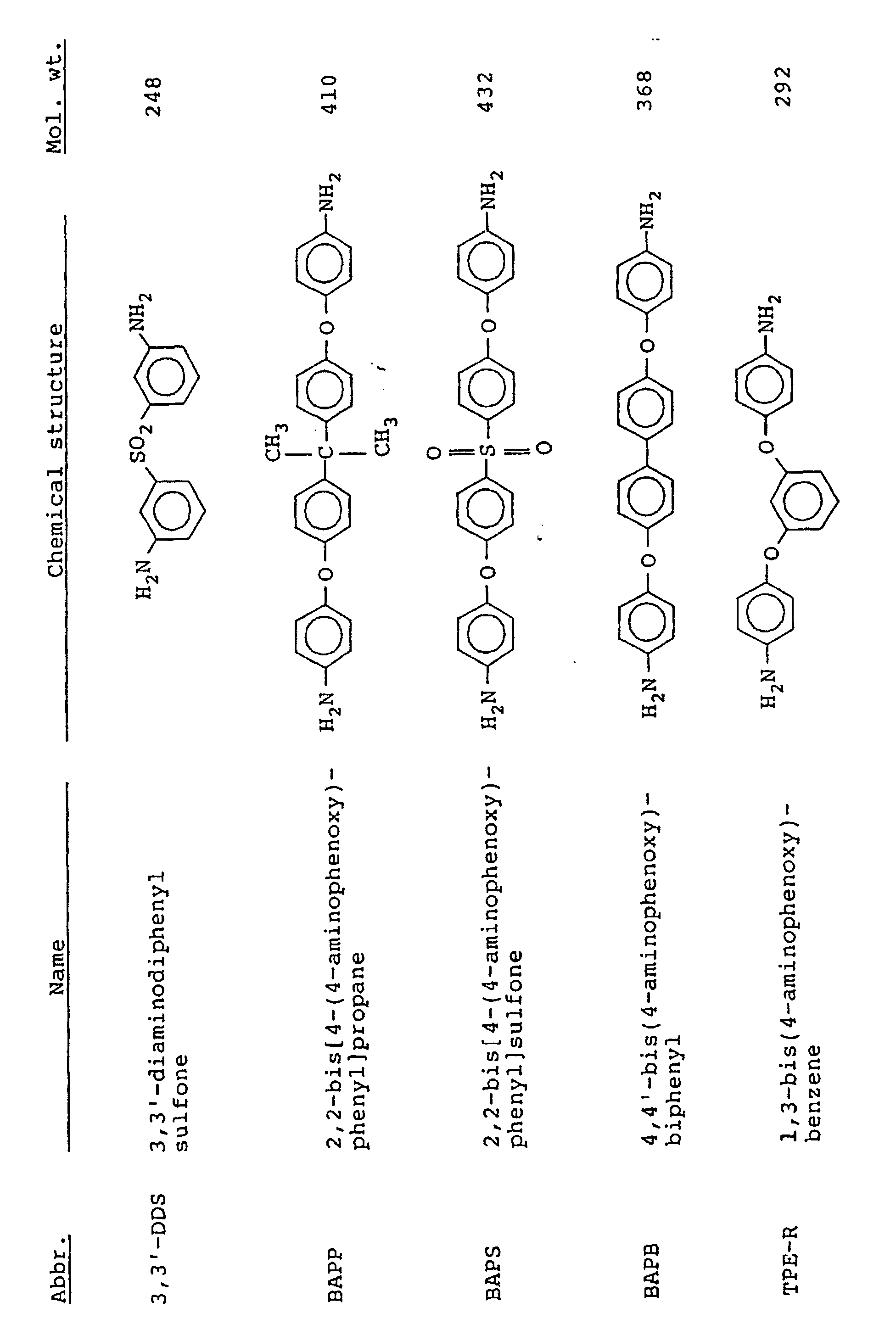

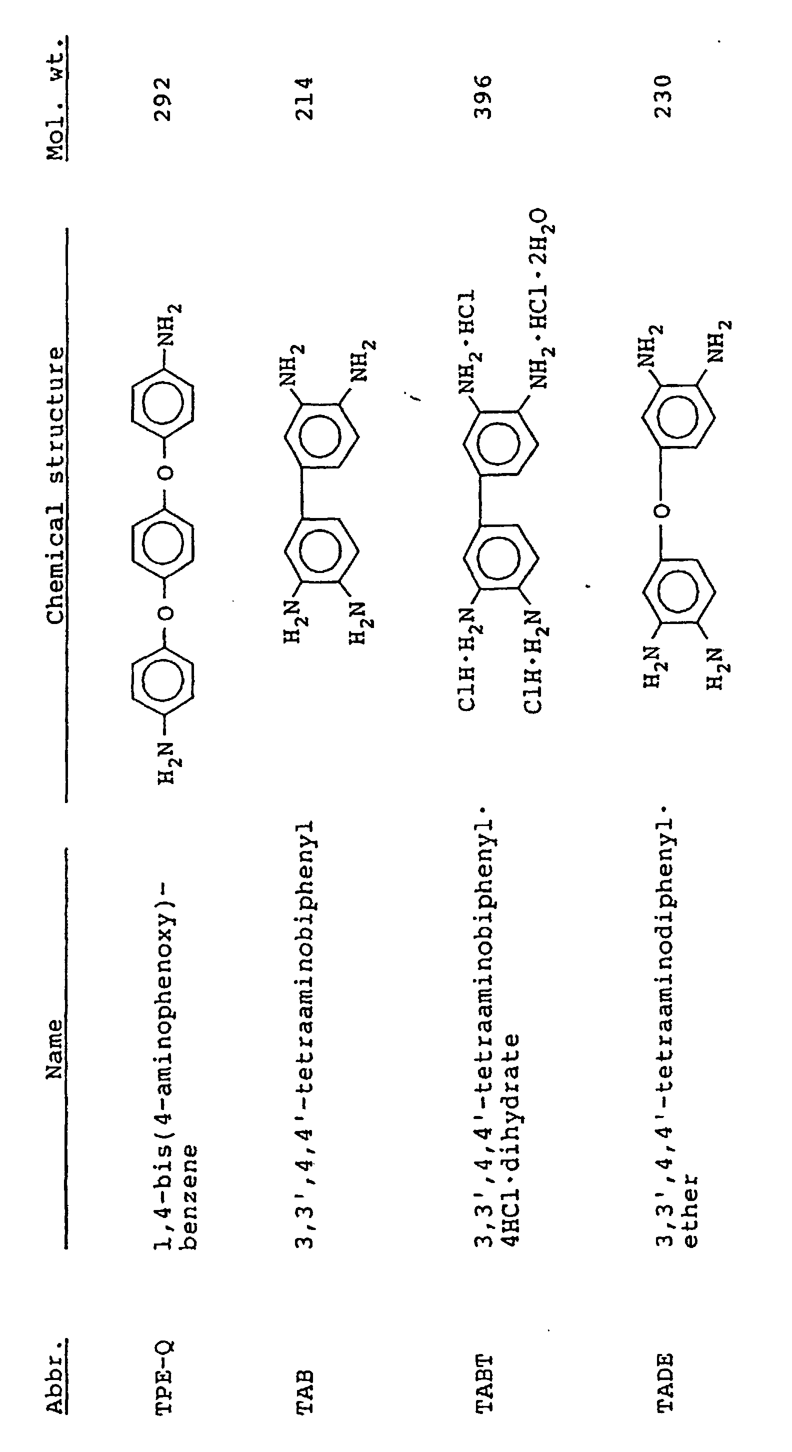

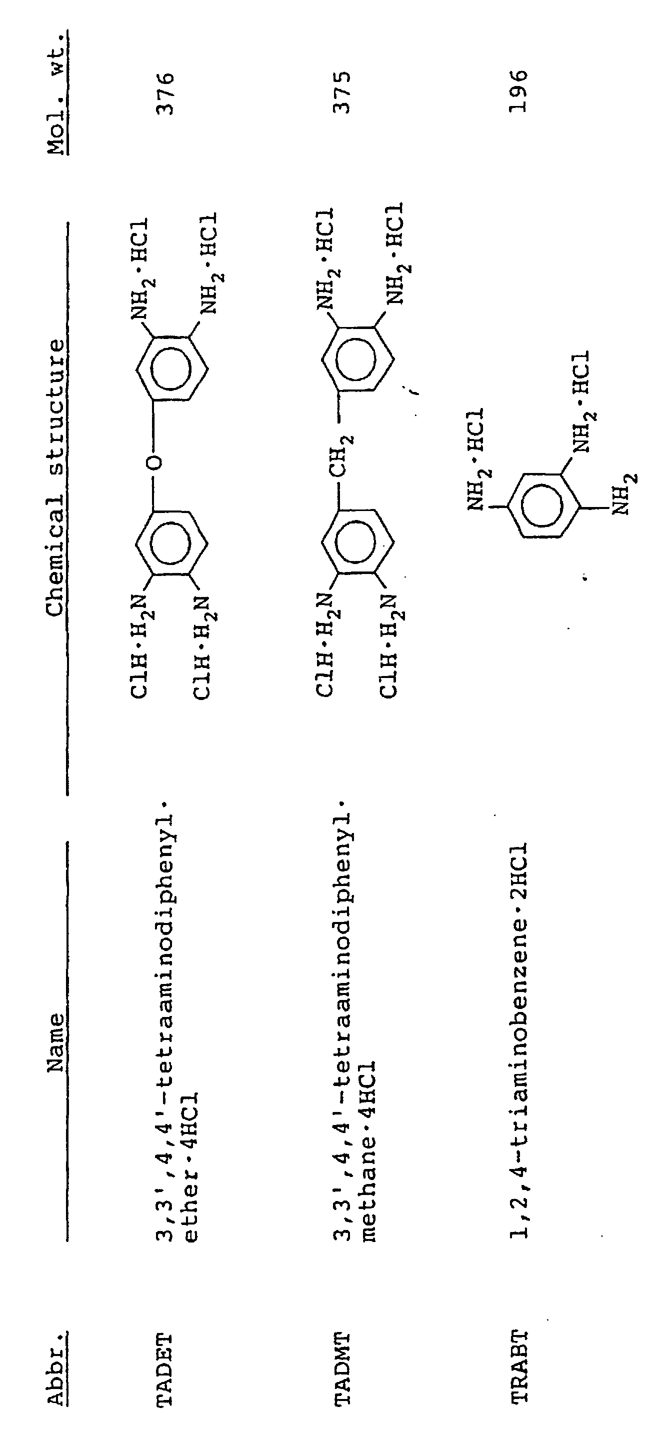

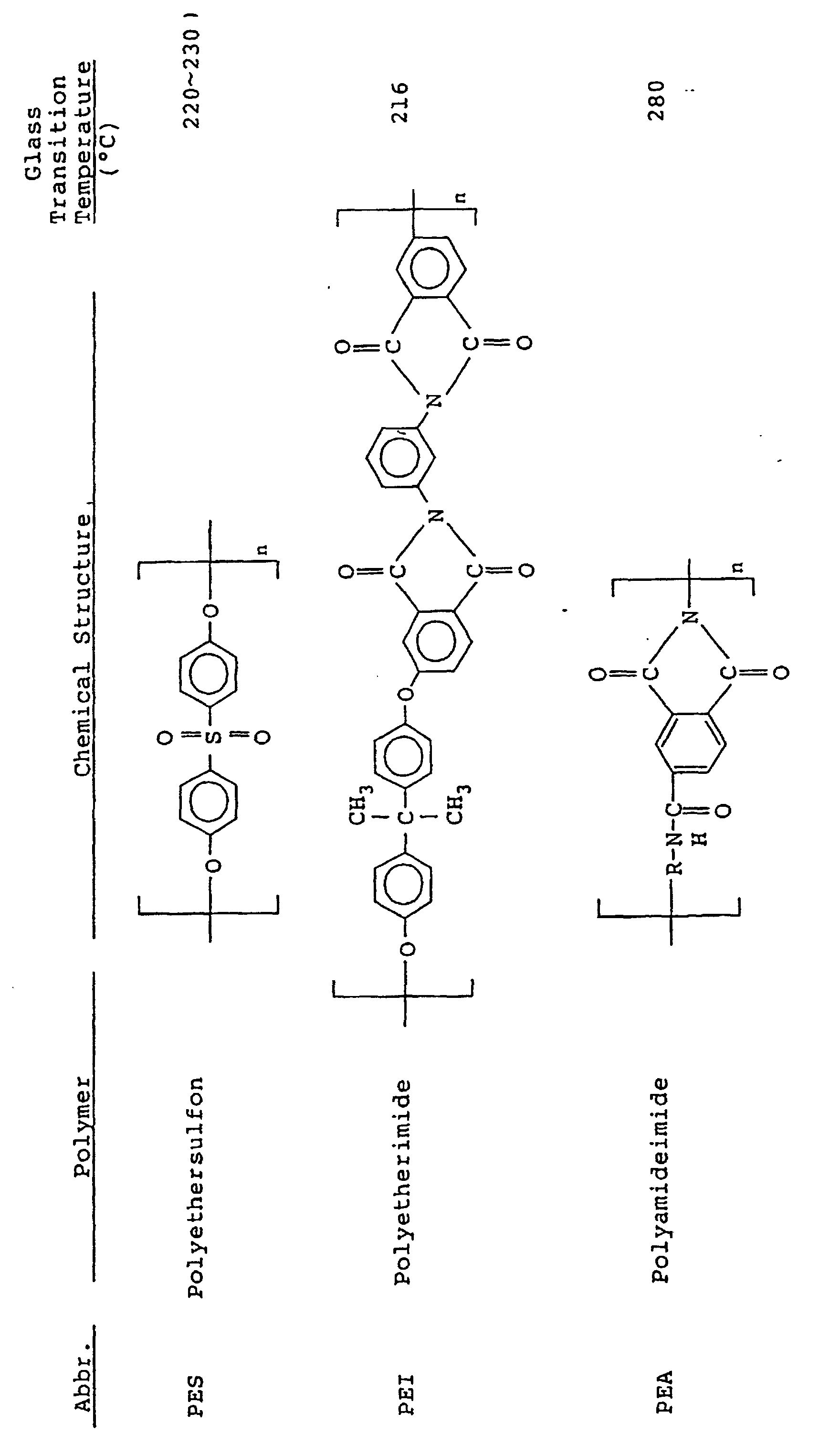

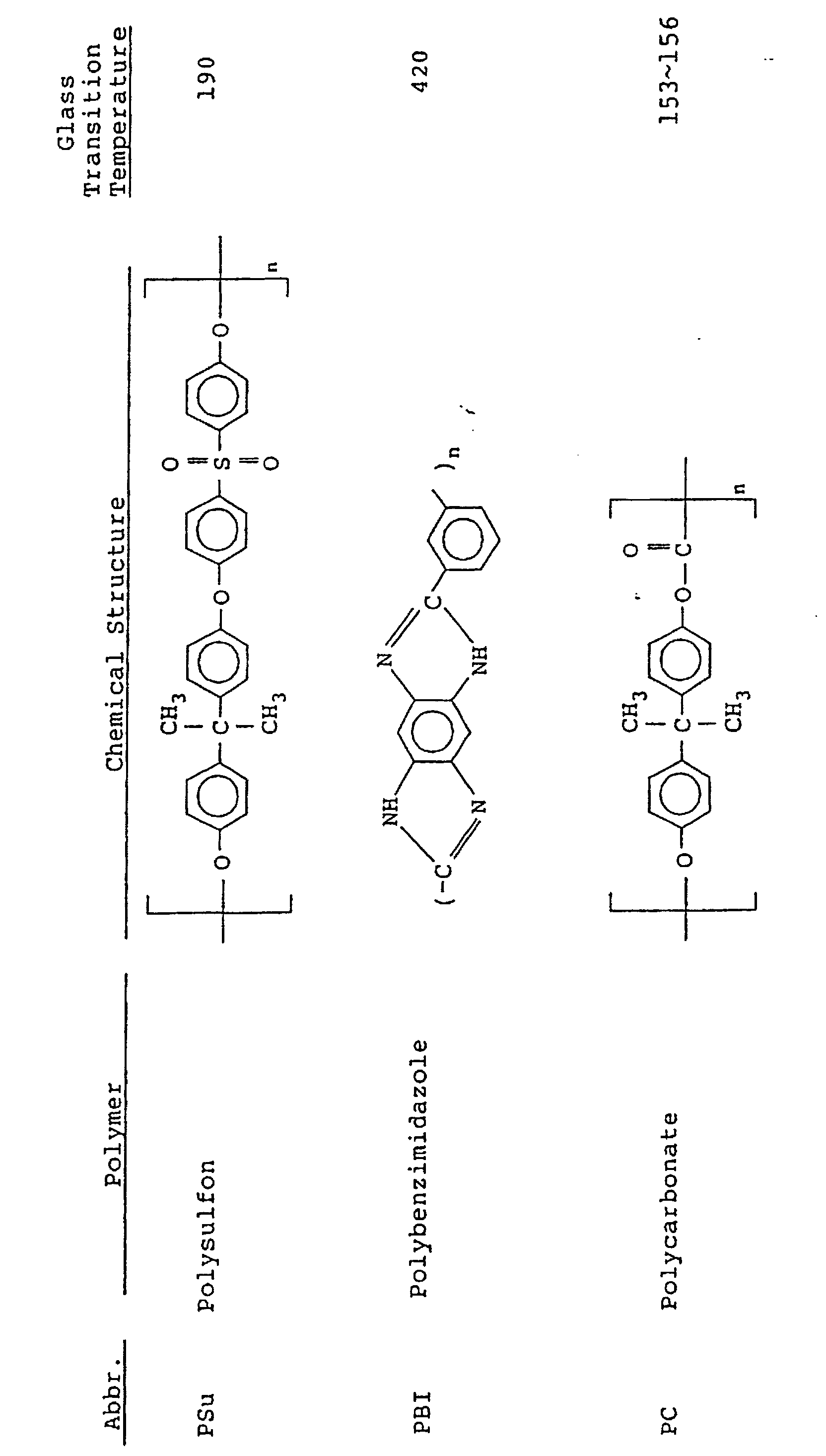

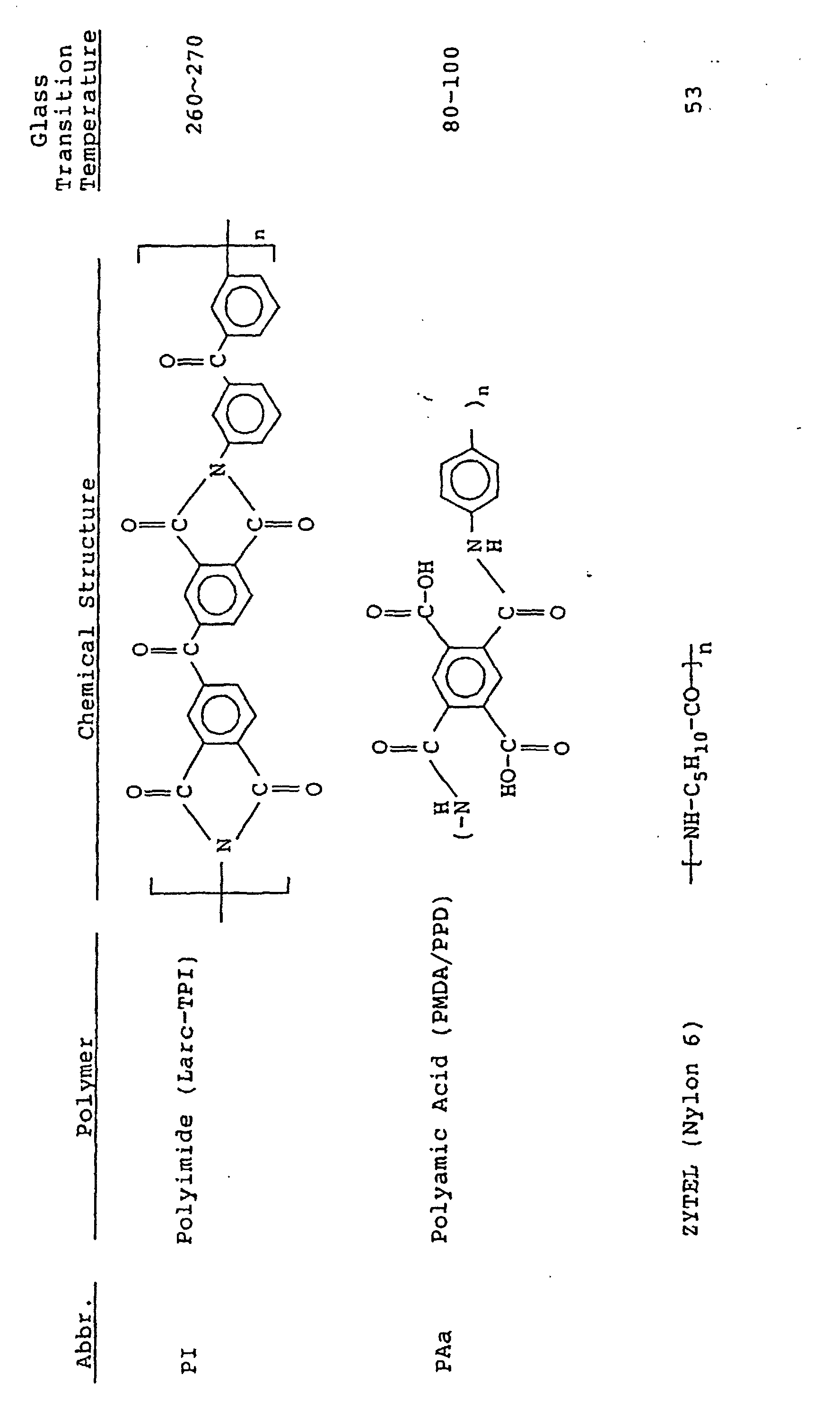

Chemical names and chemical structures of curable resins used in Examples of the present invention are shown below.

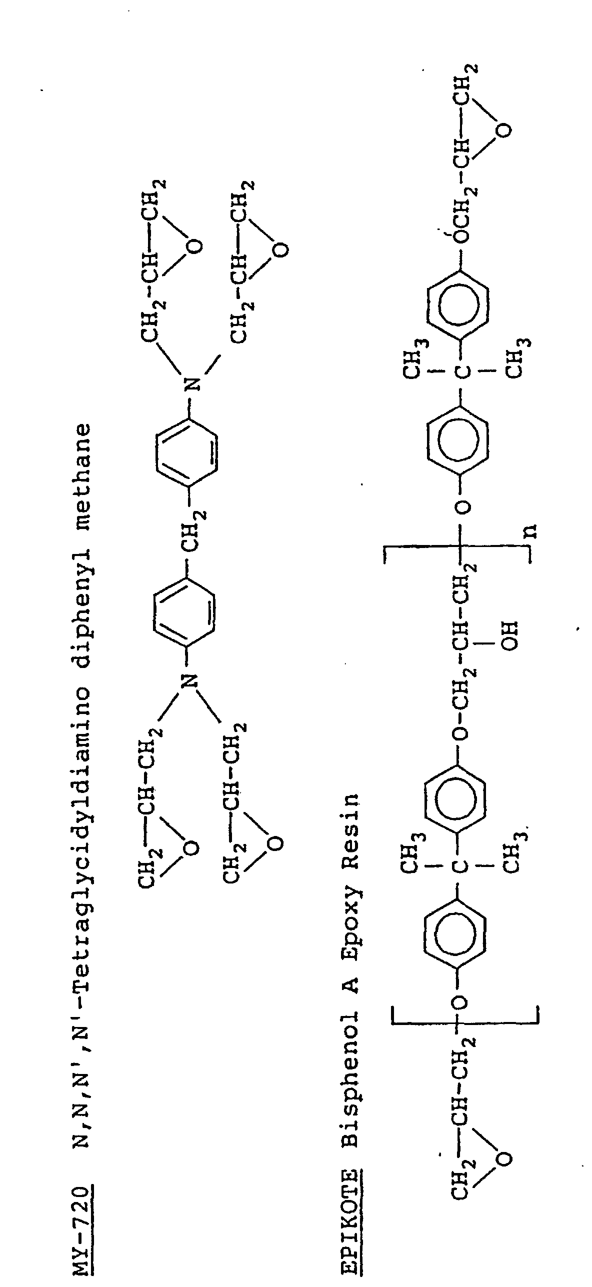

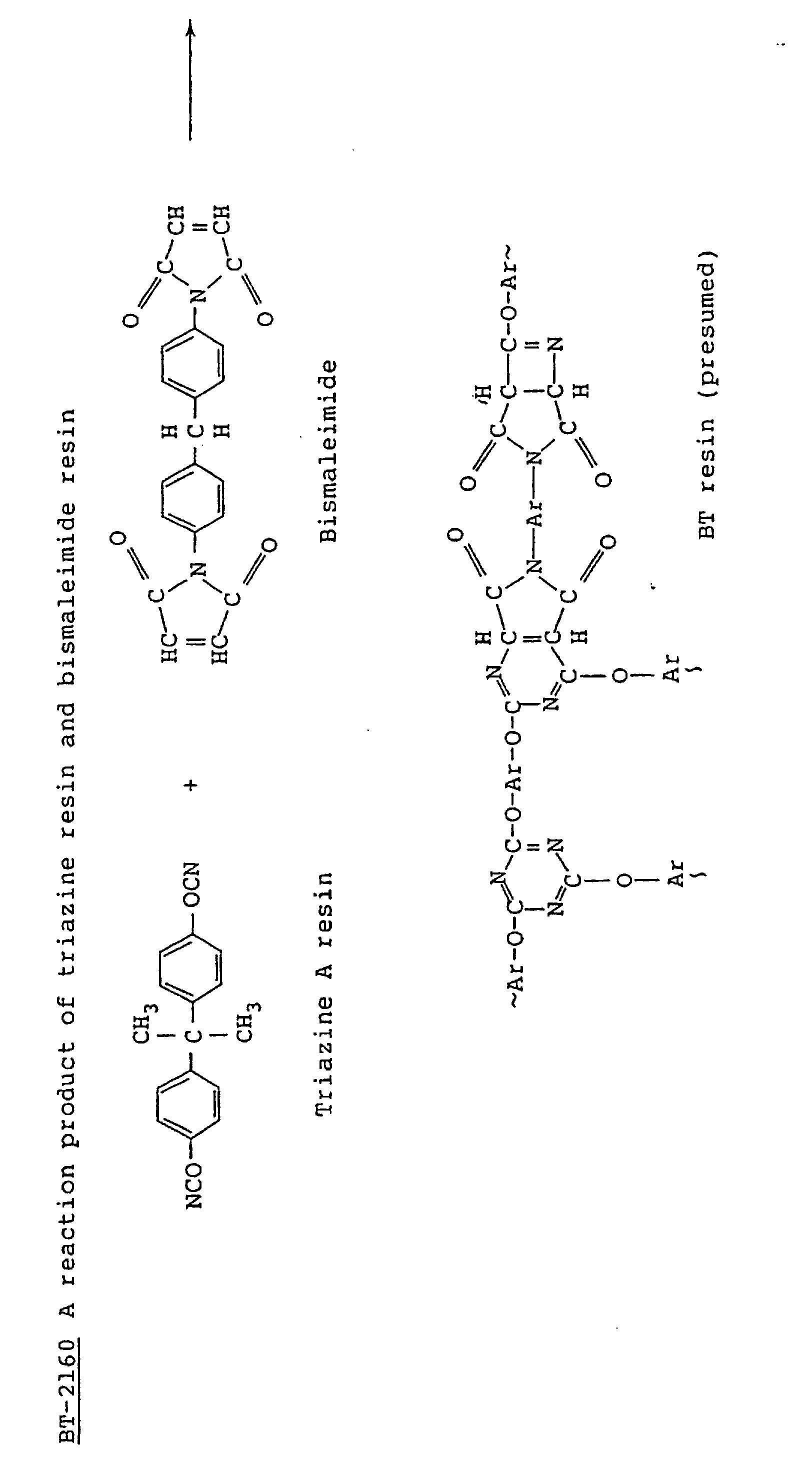

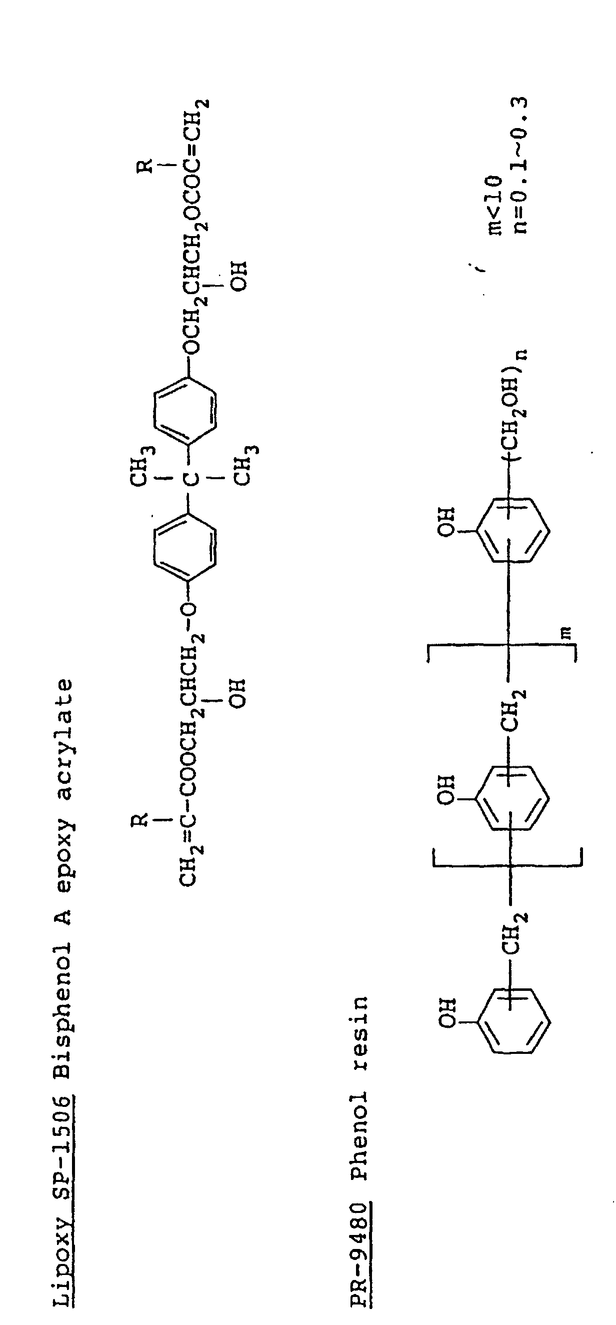

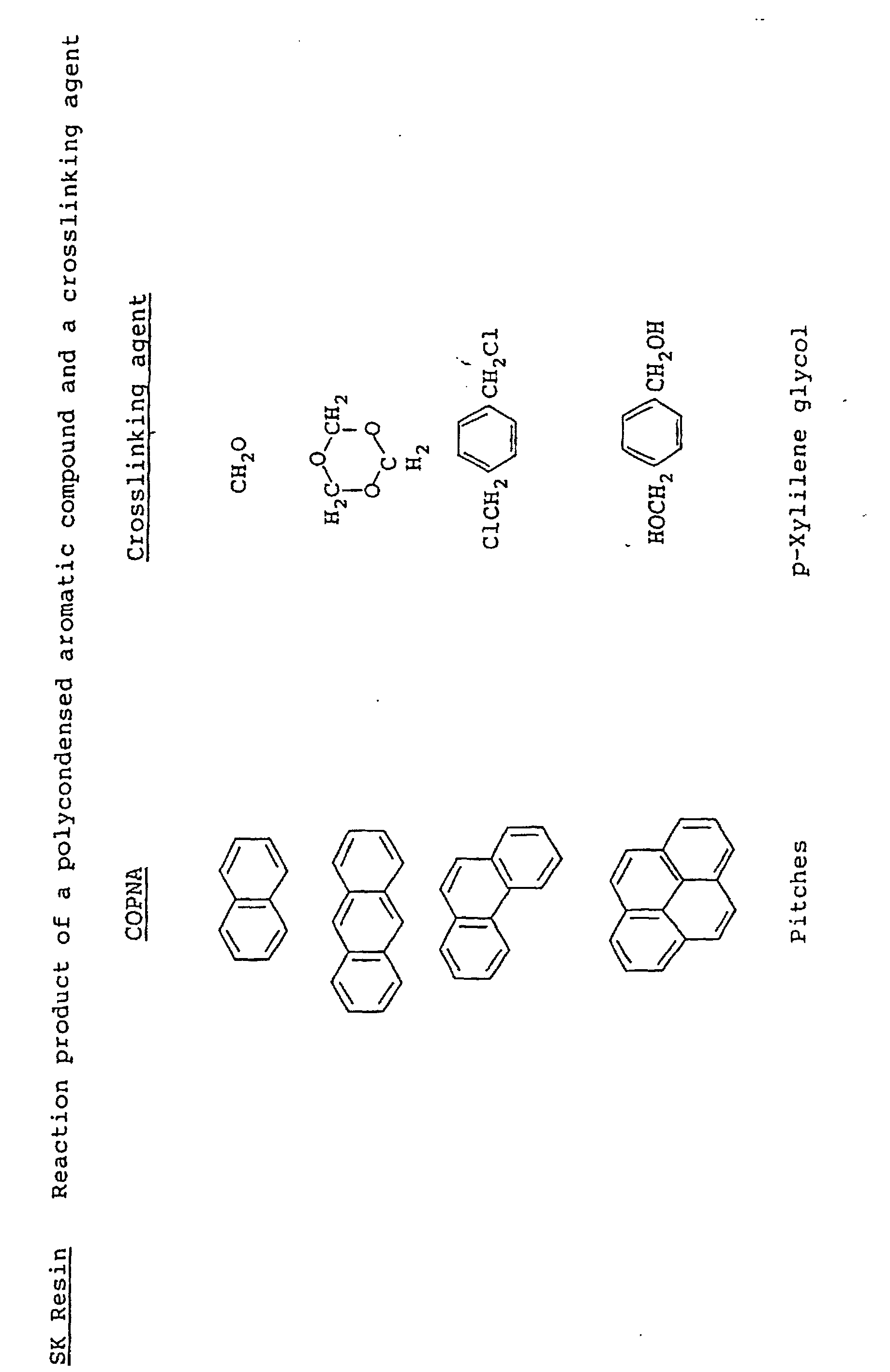

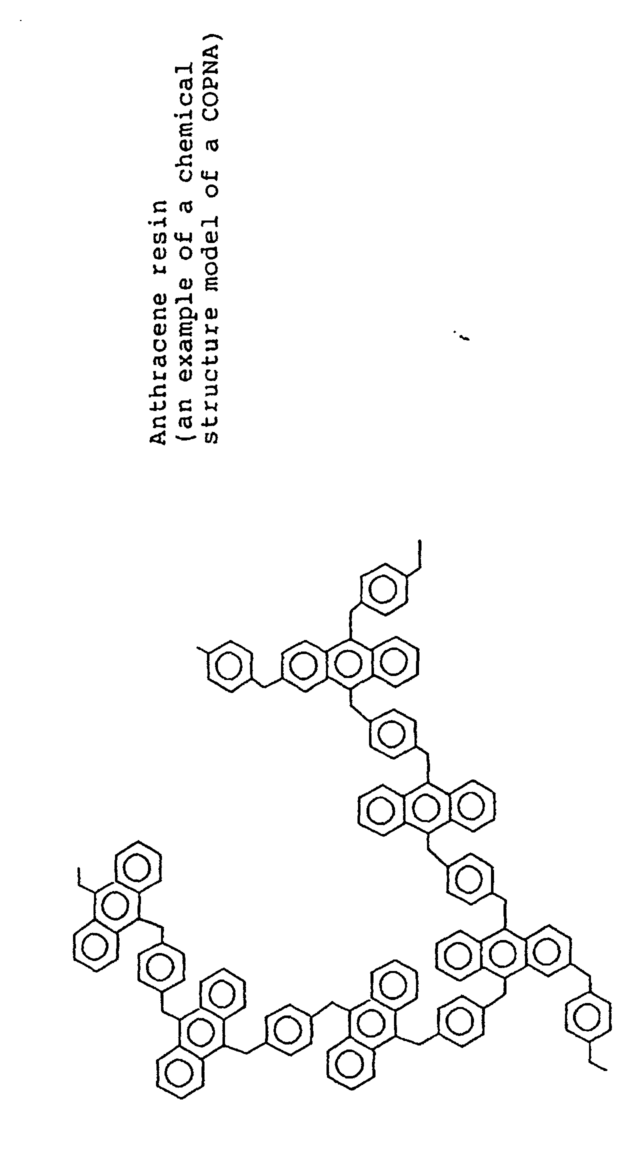

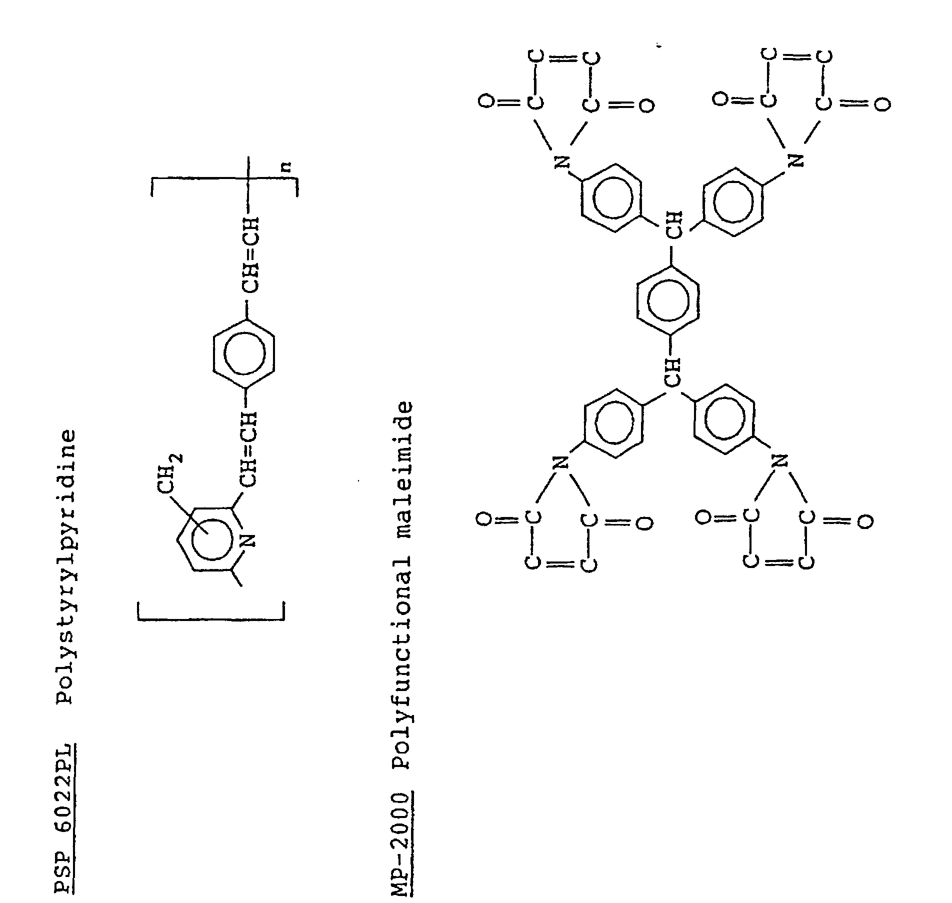

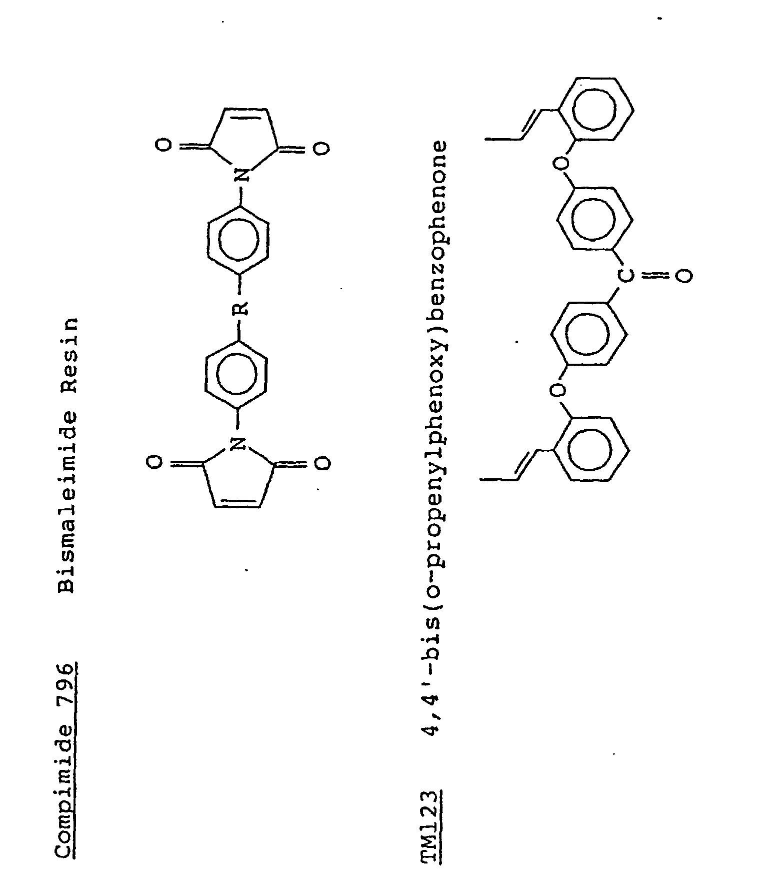

## Claims

1. A polyamic acid composite comprising
i) a polyamic acid having a three-dimensional network molecular structure obtainable by a ring-opening polyaddition reaction of a tetracarboxylic acid dianhydride with an aromatic diamine and tri- or tetramino compound wherein the tetracarboxylic acid dianhydride/ aromatic diamine molar ratio is (100)/(50-100), the tetracarboxylic acid dianhydride/ aromatic diamine/ tri- or tetraamino compound molar ratio is (100)/(50-100)/(2-25) and an equivalent ratio of the reactive groups in the tetracarboxylic acid dianhydride to those in the aromatic diamine and the tri- or tetraamino compound (an acid value/ amine value ratio) is 0.95 to 1.05
ii)
(a) at least one high molecular weight polymer component selected from polyamideimide, polyetherimide, polyethersulfone, polysulfone, polybenzimidazole, polybenzoxazole, polybenzothiazole, polyamide, polypeptide, polyester, polycarbonate and polyacrylonitrile which is (are) dispersed in the three-dimensional network molecular structure of the polyamic acid and the molecular chains of which are interpenetrated with molecular chains of the polyamic acid or
(b) a curable resin composition not being a polyamic acid which is dispersed in the three-dimensional network molecular structure of the polyamic acid.

2. The polyamic acid composite as claimed in claim 1, wherein said tetracarboxylic acid dianhydride is selected from the group consisting of a tetracarboxy benzene dianhydride, a tetracarboxy dianhydride of a compound having 2 to 5 condensed benzene rings, and compounds represented by formula (I), and substituted compounds thereof: 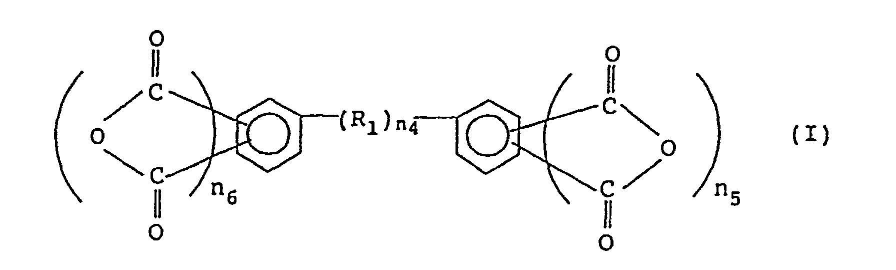 wherein R₁ represents -O-, -CO-, -SO₂-, -SO-, an alkylene group, an alkylene bicarbonyloxy group, an alkylene bioxycarbonyl group, a phenylene group, a phenylene alkylene group, or a phenylene dialkylene group; n₄ is 0 or 1; n₅ is 0 or 1; and n₆ is 1 or 2, provided that the sum of n₅ and n₆ is 2.

3. The polyamic acid composite as claimed in claim 1, wherein said aromatic diamine is selected from the group consisting of a phenylene diamine, a diamino pyridine, a diamino compound having 2 to 8 condensed benzene rings, dihydrazide, compounds represented by formula (II), and substituted compounds thereof: 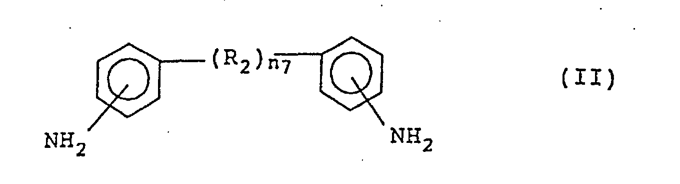 wherein R₂ represents -O-, -CO-, -SO₂-, -SO-, a phenylene group, an alkylene group, a phenylene alkylene group, a phenylene dialkylene group, or 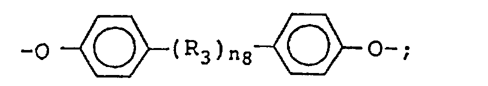 n₇ is 0 or 1; R₃ represents -O-, -CO-, -SO₂-, -SO-, a phenylene group, an alkylene group, or a phenylene alkylene group, a phenylene dialkylene group; and n₈ is 0 or 1.

4. The polyamic acid composite as claimed in claim 1, wherein said tri- or tetraamino compound is selected from the group consisting of compounds represented by formula (III) or (IV): 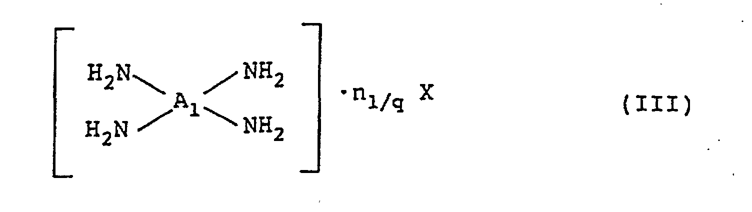 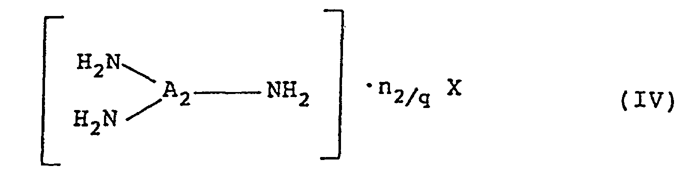 wherein A₁ represents 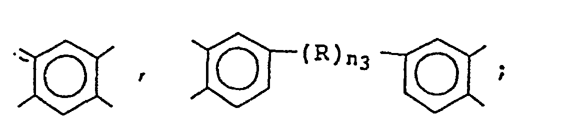 A₂ represents 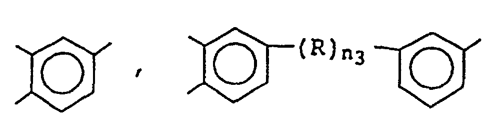 or 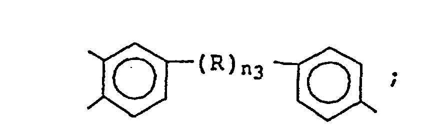 n₁ is 0 or an integer of 1 to 4; n₂ is 0 or an integer of 1 to 3; X represents an acid; q is the base number of the acid; R represents -O-, -CH₂-, -CO- or -SO₂-; and n₃ is 0 or 1.

5. The polyamic acid composite as claimed in claim 4, wherein said tri- or tetraamino compound comprises at least one addition salt of said compound represented by formula (III) or (IV), selected from the group consiting of salts of p-toluensulfonic acid, picric acid and hydrochloric acid.

6. The polyamic acid composite as claimed in claim 1, wherein said component or composition of ii) is incorporated in an amount of 1 to 80% by weight based on the polyamic acid composite.

7. The polyamic acid composite as claimed in claim 1, wherein said polyamic acid has a molecular weight of from 10,000 to 300,000.

8. The polyamic acid composite as claimed in claim 1, wherein said tetracarboxylic acid dianhydride is selected from pyromellitic dianhydride, benzophenonetetracarboxylic acid dianhydride, biphenyltetracarboxylic acid dianhydride and mixtures thereof.

9. The polyamic acid composite as claimed in claim 1, wherein said aromatic diamine is selected from p-phenylenediamine, m-phenylenediamine, diaminodiphenylmethane, diaminodiphenyl ether, and mixtures thereof.

10. The polyamic acid composite as claimed in claim 1, wherein said polyamic acid composite is in the form of a free-standing gel.

11. The polyamic acid composite as claimed in claim 10, wherein said gel contains an organic solvent in an amount of from 60 to 97% by weight based on the total weight of the gel.

12. The polyamic acid composite as claimed in claim 10, wherein said free-standing gel is in the form of a film.

13. A process for preparing the polyamic acid composite of Claim 1 comprising introducing the high molecular weight polymer component iia) as defined in claim 1 or the curable resin composition iib) as defined in claim 1 to the reaction system for production of the polyamic acid composite at any state before, during or after completion of the ring-opening polyaddition reaction to form a polyamic acid or at any stage before, during or after completion of the crosslinking reaction of the polyamic acid to form a gel.

14. The process as claimed in claim 13, wherein the introduction of the high molecular weight polymer component iia) or the curable resin composition iib) is conducted by the steps comprising:
(a) preparing a polyamic acid solution by polyaddition reaction of the tetracarboxylic acid dianhydride with the aromatic diamine and the tri- or tetraamino compound in an organic solution;
(b) mixing the solution of step (a) with a dispersion or a solution of the high molecular weight polymer component iia) or a solution of the curable resin composition iib) and
(c) completing gelling of the polyamic acid component in the mixture of step (b).

15. The process as claimed in claim 13, wherein ring-opening polyaddition reaction is conducted at a temperature of -10 to 30°C.

16. The process as claimed in claim 13, wherein the amount of the solvent in the cross-linking reaction system is 60 to 97% by weight of the total weight of the polyamic acid composite to be produced and the solvent.

17. The process as claimed in claim 14 comprising the further step of-casting the solution obtained before the reaction system forms the gel, as a film on a support and the cross-linking reaction is completed on said support to provide a gel film of said polyamic acid composite.

18. A process for producing a polyimide resin composite comprising the step of dehydrating and cyclizing the polyamic acid in the polyamic acid composite of Claim 1.

19. The process as claimed in claim 18, wherein said dehydrating and cyclizing step is conducted after drying the reaction product to remove the solvent used for preparation of the polyamic acid composite.

20. The process as claimed in claim 18, wherein said dehydrating and cyclizing step is conducted by heating said polyamic acid in a form of a gel.

21. The process as claimed in claim 18, wherein said polyamic acid gel contains 60 to 97% by weight of an organic solvent.

22. The process as claimed in claim 18, wherein said dehydrating is conducted using an acid anhydride and said dehydrating and cyclizing reaction is conducted in the presence of an amine as a catalyst.

23. The process as claimed in claim 18, comprising the further step of casting a solution of the polyamic acid obtained by the ring-opening polyaddition reaction as a film on support, and said cross-linking is completed on said support to provide a gel film of said polyamic acid composite.

24. A polyimide resin composite obtainable by any of the processes according to Claims 18 to 23.

## Patentansprüche

1. Polyamidsäure-Verbundstoff, umfassend
i) eine Polyamidsäure mit einer dreidimensionalen Netzwerk-Molekülstruktur, die durch eine Ringöffnungs-Polyadditionsreaktion eines Tetracarbonsäuredianhydrids mit einem aromatischen Diamin und einer Tri- oder Tetraaminoverbindung erhältlich ist, wobei das Molverhältnis Tetracarbonsäuredianhydrid/aromatisches Diamin (100)/(50-100), beträgt, das Molverhältnis Tetracarbonsäuredianhydrid/aromatisches Diamin/Tri- oder Tetraaminoverbindung (100)/(50-100)/(2-25) beträgt und das Äquivalentverhältnis der reaktiven Gruppen im Tetracarbonsäuredianhydrid zu den reaktiven Gruppen des aromatischen Diamins und der Tri- oder Tetraaminoverbindung (Verhältnis Säurezahl/Aminzahl) 0,95 bis 1,05 beträgt,
ii)
(a) mindestens eine hochmolekulare Polymerkomponente, die unter Polyamidimid, Polyetherimid, Polyethersulfon, Polysulfon, Polybenzimidazol, Polybenzoxazol, Polybenzothiazol, Polyamid, Polypeptid, Polyester, Polycarbonat und Polyacrylnitril ausgewählt ist, die in der dreidimensionalen Netzwerk-Molekülstruktur der Polyamidsäure dispergiert ist oder dispergiert sind, und wobei deren Molekülketten sich mit den Molekülketten der Polyamidsäure gegenseitig durchdringen, oder
(b) eine härtbare Harzzusammensetzung, bei der es sich nicht um eine Polyamidsäure handelt, die in der dreidimensionalen Netzwerk-Molekülstruktur der Polyamidsäure dispergiert ist.

2. Polyamidsäure-Verbundstoff nach Anspruch 1, wobei das Tetracarbonsäuredianhydrid aus der folgenden Gruppe ausgewählt ist: Tetracarboxybenzoldianhydrid, Tetracarboxydianhydrid einer Verbindung mit 2 bis 5 kondensierten Benzolringen und Verbindungen der Formel (I) und deren substituierte Verbindungen 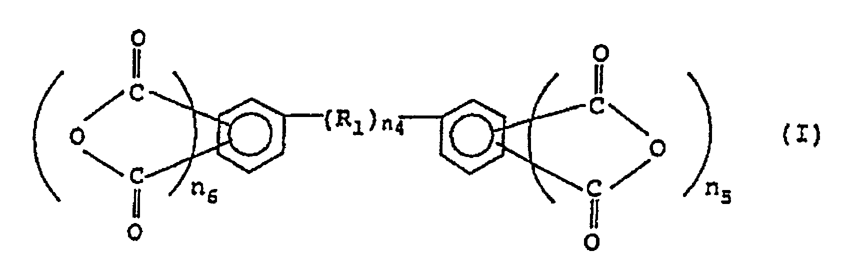 worin R₁ -O-, -CO-, -SO₂-, -SO-, eine Alkylengruppe, eine Alkylenbicarbonyloxygruppe, eine Alkylenbioxycarbonylgruppe, eine Phenylengruppe, eine Phenylenalkylengruppe oder eine Phenylendialkylengruppe bedeutet; n₄ den Wert 0 oder 1 hat; n₅ den Wert 0 oder 1 hat; und n₆ den Wert 1 oder 2 hat, mit der Maßgabe, dass die Summe von n₅ und n₆ 2 beträgt.

3. Polyamidsäure-Verbundstoff nach Anspruch 1, wobei das aromatische Diamin aus folgender Gruppe ausgewählt ist: Phenylendiamin, Diaminopyridin, eine Diaminoverbindung mit 2 bis 8 kondensierten Benzolringen, Dihydrazid, Verbindungen der Formel (II) und substituierte Verbindungen davon 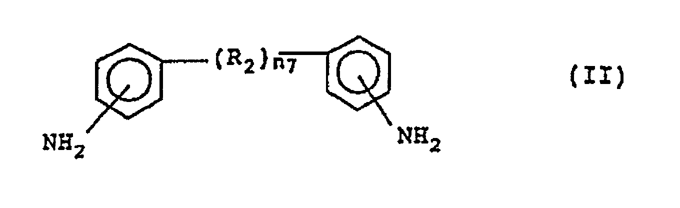 worin R₂ -O-, -CO-, -SO₂-, -SO-, eine Phenylengruppe, eine Alkylengruppe, eine Phenylenalkylengruppe, eine Phenylendialkylengruppe oder 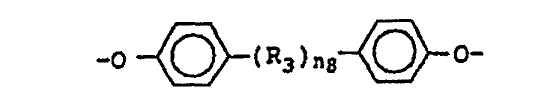 bedeutet; n₇ den Wert 0 oder 1 hat; R₃ die Bedeutung -O-, -CO-, -SO₂-, -SO-, eine Phenylengruppe, eine Alkylengruppe, eine Phenylenalkylengruppe oder eine Phenylendialkylengruppe hat; und n₈ den Wert 0 oder 1 hat.

4. Polyamidsäure-Verbundstoff nach Anspruch 1, wobei die Tri- oder Tetraaminoverbindung aus der Gruppe der Verbindungen der Formeln (III) oder (IV) ausgewählt ist: 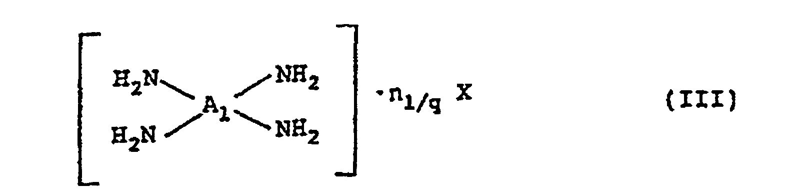 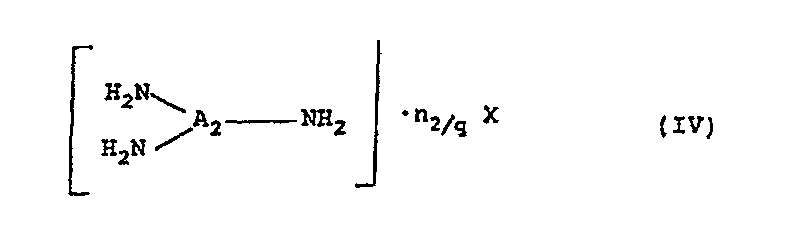 worin A₁ folgende Bedeutungen hat 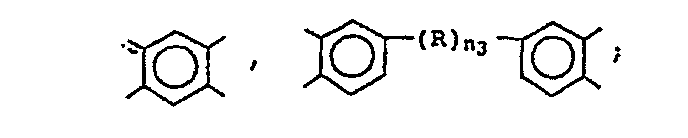 A2 folgende Bedeutungen hat 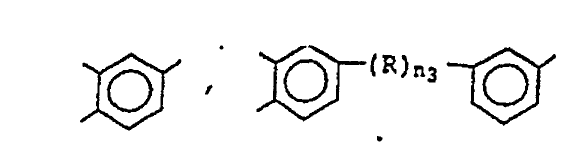 oder 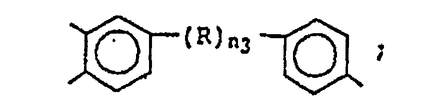 n₁ 0 oder eine ganze Zahl mit einem Wert von 1 bis 4 bedeutet; n₂ 0 oder eine ganze Zahl mit einem Wert von 1 bis 3 bedeutet; X eine Säure bedeutet; q die Basenzahl der Säure bedeutet; R die Bedeutung -O-, -CH₂-, -CO- oder -SO₂- hat; und n₃ den Wert 0 oder 1 hat.

5. Polyamidsäure-Verbundstoff nach Anspruch 4, wobei die Tri- oder Tetraaminoverbindung mindestens ein Additionssalz der Verbindung der Formeln (III) oder (IV) umfasst, das aus der Gruppe der Salze von p-Toluolsulfonsäure, Picrinsäure und Salzsäure ausgewählt ist.

6. Polyamidsäureverbundstoff nach Anspruch 1, wobei die Komponente oder Zusammensetzung gemäß ii) in einer Menge von 1 bis 80 Gew.-%, bezogen auf den Polyamidsäure-Verbundstoff, einverleibt ist.

7. Polyamidsäure-Verbundstoff nach Anspruch 1, wobei die Polyamidsäure ein Molekulargewicht von 10 000 bis 300 000 aufweist.

8. Polyamidsäure-Verbundstoff nach Anspruch 1, wobei das Tetracarbonsäuredianhydrid aus folgender Gruppe ausgewählt ist: Pyromellitsäuredianhydrid, Benzophenontetracarbonsäuredianhydrid, Biphenyltetracarbonsäuredianhydrid und Gemische davon.

9. Polyamidsäure-Verbundstoff nach Anspruch 1, wobei das aromatische Diamin aus folgender Gruppe ausgewählt ist: p-Phenylendiamin, m-Phenylendiamin, Diaminodiphenylmethan, Diaminodiphenylether und Gemische davon.

10. Polyamidsäure-Verbundstoff nach Anspruch 1, wobei der Polyamidsäure-Verbundstoff in Form eines freistehenden Gels vorliegt.

11. Polyamidsäure-Verbundstoff nach Anspruch 10, wobei das Gel ein organisches Lösungsmittel in einer Menge von 60 bis 97 Gew.-%, bezogen auf das Gesamtgewicht des Gels, enthält.

12. Polyamidsäure-Verbundstoff nach Anspruch 10, wobei das freistehende Gel in Form eines Films vorliegt.

13. Verfahren zur Herstellung des Polyamidsäure-Verbundstoffes nach Anspruch 1, umfassend das Einleiten der hochmolekularen Polymerkomponenten iia) gemäß Anspruch 1 oder der härtbaren Harzzusammensetzung iib) gemäß Anspruch 1 in das Reaktionssystem zur Herstellung des Polyamidsäure-Verbundstoffes in einem beliebigen Stadium vor, während oder nach Beendigung der Ringöffnungs-Polyadditionsreaktion unter Bildung einer Polyamidsäure oder in einem beliebigen Stadium vor, während oder nach Beendigung der Vernetzungsreaktion der Polyamidsäure zur Bildung eines Gels.

14. Verfahren nach Anspruch 13, wobei das Einleiten der hochmolekularen Polymerkomponente iia) oder der härtbaren Harzzusammensetzung iib) durch die folgenden Stufen durchgeführt wird:
(a) Herstellen einer Polyamidsäurelösung durch eine Polyadditionsreaktion des Tetracarbonsäuredianhydrids mit dem aromatischen Diamin und der Tri- oder Tetraaminoverbindung in einer organischen Lösung;
(b) Vermischen der Lösung von Stufe (a) mit einer Dispersion oder einer Lösung der hochmolekularen Polymerkomponente iia) oder einer Lösung der härtbaren Harzzusammensetzung iib) und
(c) Beenden der Gelbildung der Polyamidsäurekomponente im Gemisch von Stufe (b).

15. Verfahren nach Anspruch 13, wobei die Ringöffnungs-Polyadditionsreaktion bei einer Temperatur von -10 bis 30 °C durchgeführt wird.

16. Verfahren nach Anspruch 13, wobei die Menge des Lösungsmittels im Vernetzungsreaktionssystem 60 bis 97 Gew.-% des Gesamtgewichts aus dem zu bildenden Polyamidsäure-Verbundstoff und dem Lösungsmittel beträgt.

17. Verfahren nach Anspruch 14, umfassend die zusätzliche Stufe des Gießens der Lösung, die erhalten worden ist, bevor das Reaktionssystem das Gel bildet, in Form eines Films auf einen Träger und Beendigung der Vernetzungsreaktion auf dem Träger unter Bereitstellung eines Gelfilms aus dem Polyamidsäure-Verbundstoff.

18. Verfahren zur Herstellung eines Polyimidharz-Verbundstoffes, umfassend die Stufe der Dehydratisierung und der Cyclisierung der Polyamidsäure im Polyamidsäure-Verbundstoff von Anspruch 1.

19. Verfahren nach Anspruch 18, wobei die Dehydratisierungs- und Cyclisierungsstufe nach Trocknung des Reaktionsprodukts zur Entfernung des zur Herstellung des Polyamidsäure-Verbundstoffes verwendeten Lösungsmittels durchgeführt wird.

20. Verfahren nach Anspruch 18, wobei die Dehydratisierungs- und Cyclisierungsstufe durch Erwärmen der Polyamidsäure in Form eines Gels durchgeführt wird.

21. Verfahren nach Anspruch 18, wobei das Polyamidsäuregel 60 bis 97 Gew.-% eines organischen Lösungsmittels enthält.

22. Verfahren nach Anspruch 18, wobei die Dehydratisierung unter Verwendung eines Säureanhydrids durchgeführt wird und die Dehydratisierungs- und Cyclisierungsreaktion in Gegenwart eines Amins als Katalysator durchgeführt wird.

23. Verfahren nach Anspruch 18, umfassend die zusätzliche Stufe des Gießens einer Lösung der Polyamidsäure, die durch die Ringöffnungs-Polyadditionsreaktion erhalten worden ist, in Form eines Films auf einen Träger, wobei die Vernetzungsreaktion auf dem Träger von der Bereitstellung eines Gelfilms des Polyamidsäure-Verbundstoffes beendet wird.

24. Polyimidharz-Verbundstoff, erhältlich nach einem der Ansprüche 18 bis 23.

## Revendications

1. Composite d'acide polyamique comprenant
i) un acide polyamique ayant une structure moléculaire en réseau à trois dimensions pouvant être obtenue par une réaction de polyaddition à ouverture de cycle d'un dianhydride d'acide tétracarboxylique avec une amine aromatique et un composé tri- ou tétra-aminé où le rapport molaire de dianhydride d'acide tétracarboxylique / diamine aromatique est (100) / (50-100), le rapport molaire de dianhydride d'acide tétracarboxylique / diamine aromatique / composé tri- ou tétra-aminé est (100) / (50-100) / (2-25) et un rapport équivalent des groupes réactifs dans le dianhydride d'acide tétracarboxylique à ceux de la diamine aromatique et du composé tri- ou tétra-aminé (un rapport d'indice d'acidité / indice aminé) est de 0,95 à 1,05
ii)
(a) au moins un composant polymère à poids moléculaire élevé sélectionné parmi le polyamideimide, polyétherimide, polyéthersulfone, polysulfone, polybenzimidazole, polybenzoxazole, polybenzothiazole, polyamide, polypeptide, polyester, polycarbonate et polyacrylonitrile qui est (sont) dispersé(s) dans la structure moléculaire en réseau à trois dimensions de l'acide polyamique et dont les chaînes moléculaires sont interpénétrées par des chaînes moléculaires de l'acide polyamique ou
(b) une composition de résine durcissable qui n'est pas un acide polyamique qui est dispersée dans la structure moléculaire en réseau à trois dimensions de l'acide polyamique.

2. Composite d'acide polyamique selon la revendication 1, dans lequel ledit anhydride d'acide tétracarboxylique est sélectionné parmi le groupe constitué d'un dianhydride de tétracarboxy benzène, un dianhydride tétracarboxy d'un composé ayant de 2 à 5 cycles de benzène condensés et des composés représentés par la formule (I) et des composés substitués de ceux-ci : 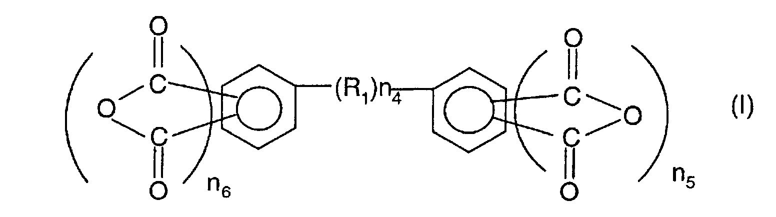 où R₁ représente -O-, -CO-, -SO₂-, -SO- un groupe alkylène, un groupe alkylène bicarbonyloxy, un groupe alkylène bioxycarbonyle, un groupe phénylène, un groupe phénylène alkylène ou un groupe phénylène dialkylène ; n₄ est 0 ou 1 ; n₅ est 0 ou 1 ; et n₆ est 1 ou 2, à la condition que la somme de n₅ et n₆ soit 2.

3. Composite d'acide polyamique selon la revendication 1, dans lequel la diamine aromatique est sélectionnée parmi le groupe constitué d'une diamine de phénylène, une pyridine diaminée, un composé diaminé ayant de 2 à 8 cycles de benzène condensés, un dihydrazide, des composés représentés par la formule (II),et des composés substitués de ceux-ci : 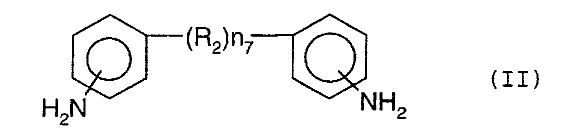 où R₂ représente -O-, -CO-, -SO₂-, -SO-, un groupe phénylène, un groupe alkylène, un groupe phénylène alkylène, un groupe phénylène dialkylène, ou 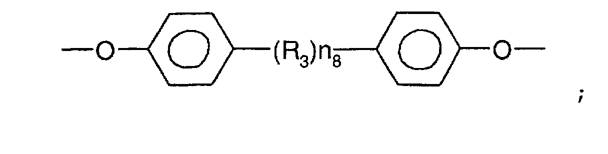 n₇ est 0 ou 1 ; R₃ représente -O-, -CO-, -SO₂-, -SO-, un groupe phénylène, un groupe alkylène ou un groupe phénylène alkylène, un groupe phénylène dialkylène ; et n₈ est 0 ou 1.

4. Composite d'acide polyamique selon la revendication 1, dans lequel ledit composé tri- ou tétra-aminé est sélectionné parmi le groupe constitué de composés représentés par les formules (III) ou (IV) : 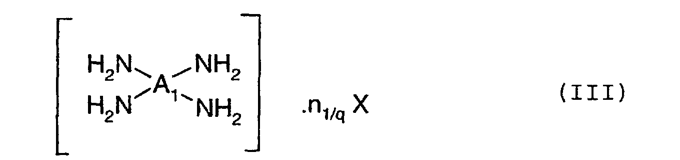 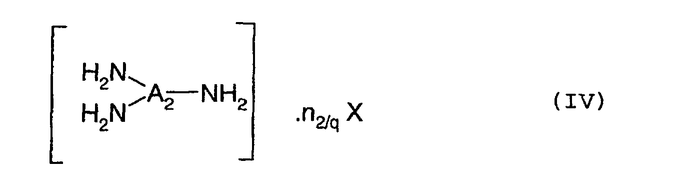 où A₁ représente 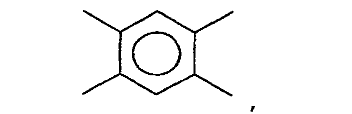 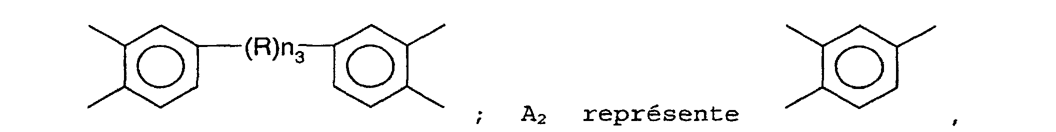 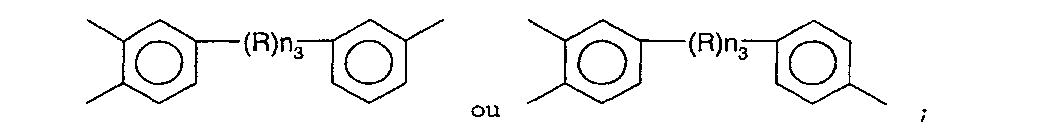 n₁ est 0 ou un entier de 1 à 4 ; n₂ est 0 ou un entier de 1 à 3 ; X représente un acide ; q est l'indice d'alcalinité de l'acide ; R représente -O-, -CH₂-, -CO- ou -SO₂- ; n₃ est 0 ou 1.

5. Composite d'acide polyamique selon la revendication 4, dans lequel ledit composé tri- ou tétra-aminé comprend au moins un sel d'addition dudit composé représenté par les formules (III) ou (IV), sélectionné parmi le groupe constitué de sels d'acide p-toluènesulfonique, d'acide picrique et d'acide chlorhydrique.

6. Composite d'acide polyamique selon la revendication 1, dans lequel ledit composant ou ladite composition de ii) est incorporé dans une quantité de 1 à 80 % en poids sur la base du composite d'acide polyamique.

7. Composite d'acide polyamique selon la revendication 1, dans lequel ledit acide polyamique a un poids moléculaire de 10000 à 300000.

8. Composite d'acide polyamique selon la revendication 1, dans lequel ledit dianhydride d'acide tétracarboxylique est sélectionné parmi le dianhydride pyromellitique, le benzophénone-dianhydride d'acide tétracarboxylique, le dianhydride d'acide biphényltétracarboxylique et les mélanges de ceux-ci.

9. Composite d'acide polyamique selon la revendication 1, dans lequel ladite diamine aromatique est sélectionnée parmi la p-phénylènediamine, la m-phénylènediamine, le diaminodiphénylméthane, l'éther de diaminodiphényle et les mélanges de ceux-ci.

10. Composite d'acide polyamique selon la revendication 1, dans lequel ledit composite d'acide polyamique se présente sous la forme d'un gel autonome.

11. Composite d'acide polyamique selon la revendication 10, dans lequel ledit gel contient un solvant organique dans une quantité allant de 60 à 97 % en poids sur la base du poids total du gel.

12. Composite d'acide polyamique selon la revendication 10, dans lequel ledit gel autonome se présente sous la forme d'un film.

13. Procédé de préparation du composite d'acide polyamique selon la revendication 1 comprenant l'introduction du composant polymère à poids moléculaire élevé iia) tel que défini dans la revendication 1 ou la composition de résine durcissable iib) telle que définie dans la revendication 1, dans le système de réaction afin de produire le composite d'acide polyamique dans n'importe quel stade avant, pendant ou après la réaction de polyaddition à ouverture de cycle pour former un acide polyamique ou à n'importe quel stade avant, pendant ou après la réaction de réticulation de l'acide polyamique pour former un gel.

14. Procédé selon la revendication 13, dans lequel l'introduction du composant polymère à poids moléculaire élevé iia) ou la composition de résine durcissable iib) est réalisée par les étapes comprenant :
(a) la préparation d'une solution d'acide polyamique par une réaction de polyaddition du dianhydride d'acide tétracarboxylique avec la diamine aromatique et le composé tri- ou tétra-aminé dans une solution organique ;
(b) le mélange de la solution de l'étape (a) avec une dispersion ou une solution du composant polymère à poids moléculaire élevé iia) ou une solution de la composition de résine durcissable iib) et
(c) une gélification du composant d'acide polyamique dans le mélange de l'étape (b).

15. Procédé selon la revendication 13, dans lequel la réaction de polyaddition à ouverture de cycle est mise en oeuvre à une température de - 10 à 30 °C.

16. Procédé selon la revendication 13, dans lequel la quantité de solvant dans le système de réaction de réticulation est de 60 à 97 % en poids du poids total du composite d'acide polyamique à produire et du solvant.

17. Procédé selon la revendication 14 comprenant l'étape ultérieure consistant à pulvériser la solution obtenue avant que le système de réaction forme un gel, sous la forme d'un film sur un support, et la réaction de réticulation est réalisée sur ledit support afin de former un film de gel dudit composite d'acide polyamique.

18. Procédé de production d'un composite de résine polyimide comprenant l'étape de déshydratation et de cyclisation de l'acide polyamique dans le composite d'acide polyamique de la revendication 1.

19. Procédé selon la revendication 18, dans lequel ladite étape de déshydratation et de cyclisation est mise en oeuvre après séchage du produit de réaction afin d'éliminer le solvant utilisé pour la préparation du composite d'acide polyamique.

20. Procédé selon la revendication 18, dans lequel ladite étape de déshydratation et de cyclisation est mise en oeuvre par chauffage dudit acide polyamique sous la forme d'un gel.

21. Procédé selon la revendication 18, dans lequel ledit gel d'acide polyamique contient de 60 à 97 % en poids d'un solvant organique.

22. Procédé selon la revendication 18, dans lequel ladite déshydratation est mise en oeuvre en utilisant un anhydride d'acide et ladite réaction de déshydratation et de cyclisation est mise en oeuvre en présence d'une amine en tant que catalyseur.

23. Procédé selon la revendication 18, comprenant l'étape ultérieure de pulvérisation d'une solution de l'acide polyamique obtenu par la réaction de polyaddition à ouverture de cycle sous la forme d'un film sur un support, et ladite réticulation est réalisée sur ledit support afin de former un film de gel dudit composite d'acide polyamique.

24. Composite de résine polyimide pouvant être obtenu par n'importe lequel des procédés selon les revendications 18 à 23.
